(19) **Europäisches Patentamt**
**European Patent Office**
**Office européen des brevets**

(11) **EP 3 065 330 A1**

(12) **EUROPEAN PATENT APPLICATION**
published in accordance with Art. 153(4) EPC

(43) Date of publication:
**07.09.2016 Bulletin 2016/36**

(51) Int Cl.:
***H04L 1/06*** *(2006.01)*

(21) Application number: **14857075.7**

(22) Date of filing: **17.04.2014**

(86) International application number:
**PCT/CN2014/075545**

(87) International publication number:
**WO 2015/062216 (07.05.2015 Gazette 2015/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.11.2013 CN 201310539249**

(71) Applicant: **Huawei Technologies Co., Ltd.**
**Longgang District**
**Shenzhen, Guangdong 518129 (CN)**

(72) Inventors:
- **WU, Tao**
 **Shenzhen**
 **Guangdong 518129 (CN)**
- **LU, Weishan**
 **Shenzhen**
 **Guangdong 518129 (CN)**

(74) Representative: **Epping - Hermann - Fischer**
**Patentanwaltsgesellschaft mbH**
**Schloßschmidstraße 5**
**80639 München (DE)**

(54) **DATA RETRANSMISSION METHOD AND COMMUNICATION DEVICE**

(57) Provided are a data retransmission method and a communication device. The data retransmission method comprises: sending, by a transmitting end device, a first data set to a receiving end device using a first transmitting mode set; and retransmitting, by the transmitting end device, the first data set to the receiving end device using a second transmitting mode set, so that the receiving end device merges the first data set sent by the transmitting end device using the first transmitting mode set with the first data set retransmitted using the second transmitting mode set and demodulates the first data set, the transmitting modes in the first transmitting mode set and the transmitting modes in the second transmitting mode set being orthogonal in one-to-one correspondence or being quasi-orthogonal. The data retransmission method and communication device provided in the embodiments of the present invention are used for improving the performance of data retransmission.

the transmitting end device transmits a first data set to a receiving end device using a first transmission mode set ⟶ S101

the transmitting end device retransmits the first data set to the receiving end device using a second transmission mode set, where the receiving end device merges the first data set transmitted by the transmitting end device using the first transmission mode set with the first data set retransmitted by the transmitting end device using the second transmission mode set, and demodulates the merged data set to obtain the first data set, and transmission modes in the first transmission mode set are one-to-one orthogonal or quasi-orthogonal to transmission modes in the second transmission mode set ⟶ S102

**Figure 1**

**Description**

**FIELD**

The invention relates to the field of communication technology, and in particular to a data retransmission method and a communication device.

**BACKGROUND**

In wireless communication environments, a wireless transmission channel may have a poor transmission quality due to various influencing factors such as channel noises, fading or disturbances, and thus errors may exist in the data received by a receiving device. Therefore, automatic retransmission request (Automatic Retransmission Request, ARQ) technology is employed in wireless communication.

The conventional ARQ technology may be implemented with two mechanisms. In one mechanism, a receiving end device receives a data packet from a transmitting end device, checks the received data packet with a check method such as cyclic redundancy check (Cyclic Redundancy Check, CRC), and informs the transmitting end device to retransmit the data packet in a case that a error is found in the received data packet. The receiving end device merges packets received at two or more times using symbol merging method, to obtain a merged data packet, thereby improving data packet transmission performance. In another mechanism, the transmitting end device transmits a data packet to the receiving end device, and then automatically retransmits the data packet in a case that no feedback massage transmitted by the receiving end device is received in a predetermined time period. The receiving end device merges packets received at two or more times using symbol merging method, to obtain a merged data packet, thereby improving data packet transmission performance as well.

In the current ARQ technology, the same transmission mode is used in a process of transmitting the data packet from the transmitting end device to the receiving end terminal and in a process of retransmitting the data packet from the transmitting end device to the receiving end terminal. Since the transmission of data packets using the same transmission mode are subject to the same disturbance, errors in the data packet can not be eliminated by merging data packets transmitted at multiple times, and thus data retransmission performance can be affected.

**SUMMARY**

A data retransmission method and a communication device are provided according to embodiments of the invention, to improve data retransmission performance.

In a first aspect, a data retransmission method is provided, which includes:

transmitting, by a transmitting end device, a first data set to a receiving end device using a first transmission mode set; and

retransmitting, by the transmitting end device, the first data set to the receiving end device using a second transmission mode set, where the receiving end device merges the first data set transmitted by the transmitting end device using the first transmission mode set with the first data set retransmitted by the transmitting end device using the second transmission mode set, and demodulates the merged data set to obtain the first data set; and transmission modes in the first transmission mode set are one-to-one orthogonal or quasi-orthogonal to transmission modes in the second transmission mode set.

In a first possible implementation of the first aspect, the first transmission mode set includes a first transmission mode, the second transmission mode set includes a second transmission mode, and the first data set includes first data; the transmitting, by a transmitting end device, a first data set to a receiving end device using a first transmission mode set includes:

transmitting, by the transmitting end device, the first data to the receiving end device using the first transmission mode; and

the retransmitting, by the transmitting end device, the first data set to the receiving end device using a second transmission mode set, where the receiving end device merges the first data set transmitted by the transmitting end device using the first transmission mode set with the first data set retransmitted by the transmitting end device using the second transmission mode set, and demodulates the merged data set to obtain the first data set; and transmission modes in the first transmission mode set are one-to-one orthogonal or quasi-orthogonal to transmission modes in the second transmission mode set, includes:

retransmitting, by the transmitting end device, the first data to the receiving end device using the second transmission mode, where the receiving end device merges the first data transmitted by the transmitting end device using the first transmission mode with the first data retransmitted by the transmitting end device using the second transmission mode, and demodulates the merged data to obtain first data; where the first transmission mode is orthogonal or quasi-orthogonal to the second transmission mode.

In a second possible implementation of the first aspect, the first transmission mode set includes a first transmission mode and a third transmission mode, the second transmission mode set includes a second transmission mode and a fourth transmission mode, and the first data set includes first data and second data;
the transmitting, by a transmitting end device, a first data set to a receiving end device using a first transmission mode set includes:

transmitting, by the transmitting end device, the first data to the receiving end device using the first transmission mode; and transmitting, by the transmitting end device, the second data to the receiving end device using the third transmission mode; and

the retransmitting, by the transmitting end device, the first data set to the receiving end device using a second transmission mode set, where the receiving end device merges the first data set transmitted by the transmitting end device using the first transmission mode set with the first data set retransmitted by the transmitting end device using the second transmission mode set and demodulates the merged data set to obtain the first data set, and transmission modes in the first transmission mode set are one-to-one orthogonal or quasi-orthogonal to transmission modes in the second transmission mode set, includes:

retransmitting, by the transmitting end device, the first data to the receiving end device using the second transmission mode; and retransmitting, by the transmitting end device, the second data to the receiving end device using the fourth transmission mode, where the receiving end device merges the first data transmitted by the transmitting end device using the first transmission mode with the first data retransmitted by the transmitting end device using the second transmission mode, and demodulates the merged data to obtain the first data; the receiving end device merges the second data transmitted by the transmitting end device using the third transmission mode with the second data retransmitted by the transmitting end device using the fourth transmission mode and demodulates the merged data to obtain the second data; the first transmission mode is orthogonal or quasi-orthogonal to the second transmission mode; and the third transmission mode is orthogonal or quasi-orthogonal to the fourth transmission mode.

In conjunction with the second possible implementation of the first aspect, in a third possible implementation, the first transmission mode is orthogonal or quasi-orthogonal to the third transmission mode; and
the retransmitting, by the transmitting end device, the first data set to the receiving end device using a second transmission mode set, where the receiving end device merges the first data set transmitted by the transmitting end device using the first transmission mode set with the first data set retransmitted by the transmitting end device using the second transmission mode set, and demodulates the merged data set to obtain the first data set; and transmission modes in the first transmission mode set are one-to-one orthogonal or quasi-orthogonal to transmission modes in the second transmission mode set, includes:

retransmitting, by the transmitting end device, the first data to the receiving end device using the third transmission mode and retransmitting, by the transmitting end device, the second data to the receiving end device using the first transmission mode, where the receiving end device merges the first data transmitted by the transmitting end device using the first transmission mode with the first data retransmitted by the transmitting end device using the third transmission mode, and demodulates the merged data to obtain the first data; and the receiving end device merges the second data transmitted by the transmitting end device using the third transmission mode with the second data retransmitted by the transmitting end device using the first transmission mode, and demodulates the merged data to obtain the second data.

In conjunction with any one of the first aspect to the third possible implementation of the first aspect, in a fourth possible implementation, the retransmitting, by the transmitting end device, the first data set to the receiving end device using a second transmission mode set includes:

retransmitting, by the transmitting end device, the first data set to the receiving end device using the second transmission mode set on receiving a first data set retransmission request transmitted by the receiving end device; or retransmitting, by the transmitting end device, the first data set to the receiving end device using the second transmission mode set, in a case that no first data set reception feedback massage transmitted by the receiving end device is received by the transmitting end device in a predetermined time period.

In conjunction with any one of the first to fourth possible implementations of the first aspect, in a fifth possible implementation, the transmitting end device includes an antenna with adjustable transmission modes, the antenna with the adjustable transmission modes includes at least two orthogonal or quasi-orthogonal transmission modes; and before the transmitting, by a transmitting end device, a first data set to a receiving end device using a first transmission mode set, the method further includes:

generating, by the transmitting end device, the first transmission mode set.

In conjunction with the fifth possible implementation of the first aspect, in a sixth possible implementation, the antenna with adjustable transmission modes includes an electronically steerable parasitic array radiator ESPAR antenna or an electromagnetic band gap EBG antenna.

In a second aspect, a data retransmission method is provided, which includes:

receiving, by a receiving end device, a first data set transmitted by a transmitting end device, using a first reception mode set;

receiving, by the receiving end device, the first data set retransmitted by the transmitting end device, using a second reception mode set, where reception modes in the first reception mode set are one-to-one orthogonal or quasi-orthogonal to reception modes in the second reception mode set; and

merging, by the receiving end device, the first data set received using the first reception mode set with the first data set received using the second reception mode set; and demodulating, by the receiving end device, the merged data set to obtain the first data set.

In a first possible implementation of the second aspect, the first reception mode set includes a first reception mode, the second reception mode set includes a second reception mode, and the first data set includes first data; the receiving, by a receiving end device, a first data set transmitted by a transmitting end device, using a first reception mode set includes:

receiving, by the receiving end device, the first data transmitted by the transmitting end device, using the first reception mode;

the receiving, by the receiving end device, the first data set retransmitted by the transmitting end device, using a second reception mode set, where reception modes in the first reception mode set are one-to-one orthogonal or quasi-orthogonal to reception modes in the second reception mode set includes:

receiving, by the receiving end device, the first data retransmitted by the transmitting end device, using the second reception mode, where the first reception mode is orthogonal or quasi-orthogonal to the second reception mode; and

the merging, by the receiving end device, the first data set received using the first reception mode set with the first data set received using the second reception mode set; and demodulating, by the receiving end device, the merged data set to obtain the first data set includes:

merging, by the receiving end device, the first data received using the first reception mode with the first data received using the second reception mode; and demodulating, by the receiving end device, the merged data to obtain the first data.

In a second possible implementation of the second aspect, the first reception mode set includes a first reception mode and a third reception mode, the second reception mode set includes a second reception mode and a fourth reception mode, and the first data set includes first data and second data; the receiving, by a receiving end device, a first data set transmitted by a transmitting end device, using a first reception mode set includes:

receiving, by the receiving end device, the first data transmitted by the transmitting end device, using the first reception mode; and receiving, by the receiving end device, the second data transmitted by the transmitting end device, using the third reception mode;

the receiving, by the receiving end device, the first data set retransmitted by the transmitting end device, using a second reception mode set, where reception modes in the first reception mode set are one-to-one orthogonal or quasi-orthogonal to reception modes in the second reception mode set includes:

receiving, by the receiving end device, the first data retransmitted by the transmitting end device, using the second reception mode; and receiving, by the receiving end device, the second data retransmitted by the transmitting end device, using the fourth reception mode, where the first reception mode is orthogonal or quasi-orthogonal to the second reception mode, and the third reception mode is orthogonal or quasi-orthogonal to the fourth reception mode; and

the merging, by the receiving end device, the first data set received using the first reception mode set with the first data set received using the second reception mode set; and demodulating, by the receiving end device, the merged data set to obtain the first data set includes:

merging, by the receiving end device, the first data received using the first reception mode with the first data received using the second reception mode, and demodulating, by the receiving end device, the merged data to obtain the first data; and merging, by the receiving end device, the second data received using the third reception mode with the second data received using the fourth reception mode, and demodulating, by the receiving end device, the merged data to obtain the second data.

In conjunction with the second possible implementation of the second aspect, in a third possible implementation, the first reception mode is orthogonal or quasi-orthogonal to the third reception mode; the receiving, by the receiving end device, the first data set retransmitted by the transmitting end device, using a second reception mode set, where reception modes in the first reception mode set are one-to-one orthogonal or quasi-orthogonal to reception modes in the second reception mode set includes:

receiving, by the receiving end device, the first data retransmitted by the transmitting end device, using the third reception mode; and receiving, by the receiving end device, the second data retransmitted by the transmitting end device, using the first reception mode; and

the merging, by the receiving end device, the first data set received using the first reception mode set with the first data set received using the second reception mode set; and demodulating, by the receiving end device, the merged data set to obtain the first data set includes:

merging, by the receiving end device, the first data received using the first reception mode with the first data received using the third reception mode, and demodulating, by the receiving end device, the merged data to obtain the first data; and merging, by the receiving end device, the second data received using the third reception mode with the second data received using the first reception mode, and demodulating, by the receiving end device, the merged data to obtain the second data.

In conjunction with any one of the second aspect to the third possible implementation of the second aspect, in a fourth possible implementation, the receiving, by the receiving end device, the first data set retransmitted by the transmitting end device, using a second reception mode set includes:

transmitting, by the receiving end device, a first data set retransmission request to the transmitting end device after receiving the first data set using the first reception mode set, and

receiving, by the receiving end device, the first data set retransmitted by the transmitting end device, using the second reception mode set; or

receiving, by the receiving end device, the first data set retransmitted by the transmitting end device, using the second reception mode set, in a case that a first data set reception feedback massage is not transmitted by the receiving end device to the transmitting end device in a predetermined time period.

In conjunction with any one of the first to fourth possible implementations of the second aspect, in a fifth possible implementation, the receiving end device includes an antenna with adjustable transmission modes, and the antenna with the adjustable transmission modes includes at least two orthogonal or quasi-orthogonal transmission modes; and before the receiving, by a receiving end device, a first data set transmitted by a transmitting end device, using a first reception mode set, the method further includes:

generating, by the receiving end device, the first reception mode set.

In conjunction with the fifth possible implementation of the second aspect, in a sixth possible implementation, the antenna with adjustable transmission modes includes an electronically steerable parasitic array radiator ESPAR antenna or an electromagnetic band gap EBG antenna.

In a third aspect, a communication device is provided, which includes:

a transmitting module configured to transmit a first data set to a receiving end device using a first transmission mode set; and

a retransmitting module configured to retransmit the first data set to the receiving end device using a second transmission mode set, where the receiving end device merges the first data set transmitted by the transmitting module using the first transmission mode set with the first data set retransmitted by the retransmitting module using the second transmission mode set, and demodulates the merged data set to obtain the first data set; and transmission modes in the first transmission mode set are one-to-one orthogonal or quasi-orthogonal to transmission modes in the second transmission mode set.

In a first possible implementation of the third aspect, the first transmission mode set includes a first transmission mode, the second transmission mode set includes a second transmission mode, and the first data set includes first data; the transmitting module is configured to transmit the first data to the receiving end device using the first transmission mode; and the retransmitting module is configured to retransmit the first data to the receiving end device using the second transmission mode, where the receiving end device merges the first data transmitted by the transmitting module using the first transmission mode with the first data retransmitted by the retransmitting module using the second transmission mode, and demodulates the merged data to obtain the first data; and the first transmission mode is orthogonal or quasi-orthogonal to the second transmission mode.

In a second possible implementation of the third aspect, the first transmission mode set includes a first transmission mode and a third transmission mode, the second transmission mode set includes a second transmission mode and a fourth transmission mode, and the first data set includes first data and second data; the transmitting module is configured to transmit the first data to the receiving end device using the first transmission mode, and transmit the second data to the receiving end device using the third transmission mode; and the retransmitting module is configured to retransmit the first data to the receiving end device using the second transmission mode, and retransmit the second data to the receiving end device using the fourth transmission mode, where the receiving end device merges the first data transmitted by the transmitting module using the first transmission mode with the first data retransmitted by the retransmitting module using the second transmission mode and demodulates the merged data to obtain the first data; the receiving end device merges the second data transmitted by the transmitting module using the third transmission mode with the second data retransmitted by the retransmitting module using the fourth transmission mode and demodulates the merged data to obtain the second data; the first transmission mode is orthogonal or quasi-orthogonal to the second transmission mode; and the third transmission mode is orthogonal or quasi-orthogonal to the fourth transmission mode.

In conjunction with the second possible implementation of the third aspect, in a third possible implementation, the first transmission mode is orthogonal or quasi-orthogonal to the third transmission mode; and the retransmitting module is configured to retransmit the first data to the receiving end device using the third transmission mode and retransmit the second data to the receiving end device using the first transmission mode, where the receiving end device merges the first data transmitted by the transmitting module using the first transmission mode with the first data retransmitted by the retransmitting module using the third transmission mode, and demodulates the merged data to obtain the first data; and the receiving end device merges the second data transmitted by the transmitting module using the third transmission mode with the second data retransmitted by the retransmitting module using the first transmission mode, and demodulates the merged data to obtain the second data.

In conjunction with any one of the third aspect to the third possible implementation of the third aspect, in a fourth possible implementation, the retransmitting module is configured to retransmit the first data set to the receiving end device using the second transmission mode set on receiving a first data set retransmission request transmitted by the receiving end device; or retransmit the first data set to the receiving end device using the second transmission mode set, in a case that no first data set reception feedback massage transmitted by the receiving end device is received in a predetermined time period.

In conjunction with any one of the first to fourth possible implementations of the third aspect, in a fifth possible implementation, the transmitting end device includes an antenna with adjustable transmission modes, and the antenna with the adjustable transmission modes includes at least two orthogonal or quasi-orthogonal transmission modes; and the communication device further includes:

a generation module configured to generate the first transmission mode set.

In conjunction with the fifth possible implementation of the third aspect, in a sixth possible implementation, the antenna with adjustable transmission modes includes an electronically steerable parasitic array radiator ESPAR antenna or an electromagnetic band gap EBG antenna.

In a fourth aspect, a communication device is provided, which includes:

a reception module configured to receive a first data set transmitted by a transmitting end device, using a first reception mode set;

a retransmission reception module configured to receive the first data set retransmitted by the transmitting end device, using a second reception mode set, where reception modes in the first reception mode set are one-to-one orthogonal or quasi-orthogonal to reception modes in the second reception mode set; and

a processing module configured to merge the first data set received by the reception module using the first reception mode set with the first data set received by the retransmission reception module using the second reception mode set, and demodulate the merged data set to obtain the first data set.

In a first possible implementation of the fourth aspect, the first reception mode set includes a first reception mode, the second reception mode set includes a second reception mode, and the first data set includes first data;
the reception module is configured to receive the first data transmitted by the transmitting end device, using the first reception mode;
the retransmission reception module is configured to receive the first data retransmitted by the transmitting end device, using the second reception mode, where the first reception mode is orthogonal or quasi-orthogonal to the second reception mode; and
the processing module is configured to the merge the first data received by the reception module using the first reception mode with the first data received by the retransmission reception module using the second reception mode, and demodulate the merged data to obtain the first data.

In a second possible implementation of the fourth aspect, the first reception mode set includes a first reception mode and a third reception mode, the second reception mode set includes a second reception mode and a fourth reception mode, and the first data set includes first data and second data;
the reception module is configured to receive the first data transmitted by the transmitting end device, using the first reception mode; and receive the second data transmitted by the transmitting end device, using the third reception mode;
the retransmission reception module is configured to receive the first data retransmitted by the transmitting end device, using the second reception mode; and receive the second data retransmitted by the transmitting end device, using the fourth reception mode, where the first reception mode is orthogonal or quasi-orthogonal to the second reception mode, and the third reception mode is orthogonal or quasi-orthogonal to the fourth reception mode;
the processing module is configured to merge the first data received by the reception module using the first reception mode with the first data received by the retransmission reception module using the second reception mode, and demodulate the merged data to obtain the first data; and merge the second data received by the reception module using the third reception mode with the second data received by the retransmission reception module using the fourth reception mode, and demodulate the merged data to obtain the second data.

In conjunction with the second possible implementation of the fourth aspect, in a third possible implementation, the first reception mode is orthogonal or quasi-orthogonal to the third reception mode;
the retransmission reception module is configured to receive the first data retransmitted by the transmitting end device, using the third reception mode; and receive the second data retransmitted by the transmitting end device, using the first reception mode; and
the processing module is configured to merge the first data received by the reception module using the first reception mode with the first data received by the retransmission reception module using the third reception mode, and demodulate the merged data to obtain the first data; and merge the second data received by the reception module using the third reception mode with the second data received by the retransmission reception module using the first reception mode, and demodulate the merged data to obtain the second data.

In conjunction with any one of the fourth aspect to the third possible implementation of the fourth aspect, in a fourth possible implementation, the retransmission reception module is configured to transmit a first data set retransmission request to the transmitting end device after receiving the first data set using the first reception mode set, and receive the first data set retransmitted by the transmitting end device using the second reception mode set; or receive the first data set retransmitted by the transmitting end device, using the second reception mode set, in a case that a first data set reception feedback massage is not transmitted to the transmitting end device in a predetermined time period.

In conjunction with any one of the first to fourth possible implementations of the fourth aspect, in a fifth possible implementation, the communication device includes an antenna with adjustable transmission modes, the antenna with the adjustable transmission modes includes at least two orthogonal or quasi-orthogonal transmission modes; and the communication device further includes a generation module configured to generate the first reception mode set.

In conjunction with the fifth possible implementation of the fourth aspect, in a sixth possible implementation, the antenna with adjustable transmission modes includes an electronically steerable parasitic array radiator ESPAR antenna or an electromagnetic band gap EBG antenna.

A data retransmission method and a communication device are provided according to the embodiments of the invention. The transmitting end device transmits the first data set to the receiving end device using the first transmission mode set, and then retransmits the first data set to the receiving end device using the second transmission mode set. The receiving end device merges first data sets received at two times and demodulates the merged data set to obtain the first data set. Since transmission modes in the first transmission mode set are one-to-one orthogonal or quasi-orthogonal to transmission modes in the second transmission mode set, first data sets transmitted at two times are subject to different fading and disturbances. Fading and disturbances suffered by the first data set can be eliminated by the receiving end device merging the first data sets received at two times, thereby improving data retransmission performance in wireless networks.

**BRIEF DESCRIPTION OF THE DRAWINGS**

In order to illustrate the technical solutions according to the embodiments of the present invention or in the conventional art more clearly, drawings to be used in the description of the conventional art or the embodiments will be described briefly hereinafter. Apparently, the drawings described hereinafter are only some embodiments of the present invention, and other drawings may be obtained by those skilled in the art according to those drawings without creative labor.

Figure 1 is a flow chart of a data retransmission method according to a first embodiment of the invention;

Figure 2 is a flow chart of a data retransmission method according to a second embodiment of the invention;

Figure 3 is a flow chart of a data retransmission method according to a third embodiment of the invention;

Figure 4 is a flow chart of a data retransmission method according to a fourth embodiment of the invention;

Figure 5 is a flow chart of a data retransmission method according to a fifth embodiment of the invention;

Figure 6 is a flow chart of a data retransmission method according to a sixth embodiment of the invention;

Figure 7 is a flow chart of a data retransmission method according to a seventh embodiment of the invention;

Figure 8 is a flow chart of a data retransmission method according to an eighth embodiment of the invention;

Figure 9 is a schematic structural diagram of an ESPAR antenna;

Figure 10 is a schematic structural diagram of an EBG antenna;

Figure 11 is a schematic structural diagram of an antenna in a data retransmission method according to a ninth embodiment of the invention;

Figure 12 is a signaling flow chart of the data retransmission method according to the ninth embodiment of the invention;

Figure 13 is schematic diagram of an effect of a data retransmission method according to an embodiment of the invention performed by an antenna system;

Figure 14 is a schematic structural diagram of a communication device according to a first embodiment of the invention;

Figure 15 is a schematic structural diagram of a communication device according to a second embodiment of the invention;

Figure 16 is a schematic structural diagram of a communication device according to a third embodiment of the invention; and

Figure 17 is a schematic structural diagram of a communication device according to a fourth embodiment of the invention.

**DETAILED DESCRIPTION OF EMBODIMENTS**

To illustrate the objects, technical solutions and advantages of the present invention more clearly, the technical solutions in the embodiments of the present invention will be described clearly and completely hereinafter in conjunction with the drawings in the embodiments of the present invention. Apparently, the described embodiments are only some but not all of the embodiments of the present invention. All the other embodiments obtained by those ordinary skilled in the art based on the embodiments of the present invention without creative effort fall within the scope of protection of the present invention.

In the conventional ARQ technology, the same transmission mode is used in a process of transmitting the data packet from the transmitting end device to the receiving end terminal and in a process of retransmitting the data packet from the transmitting end device to the receiving end terminal. Since data packets transmitted using the same transmission mode may be subject to the same disturbance, errors in the data packet can not be eliminated by merging data packets transmitted at multiple times. Further, multiple retransmissions of the data packet may consume system resources and cause delays. A data retransmission method is provided according to embodiments of the invention, in which the transmitting end device retransmits data using a transmission mode orthogonal or quasi-orthogonal to the transmission mode in a data transmission process. Because data transmitted using different transmission modes may be subject to different disturbances, disturbances may be effectively eliminated by the transmitting end device merging data transmitted at two times. In addition, the retransmission may be performed only once, thus the system resources are saved.

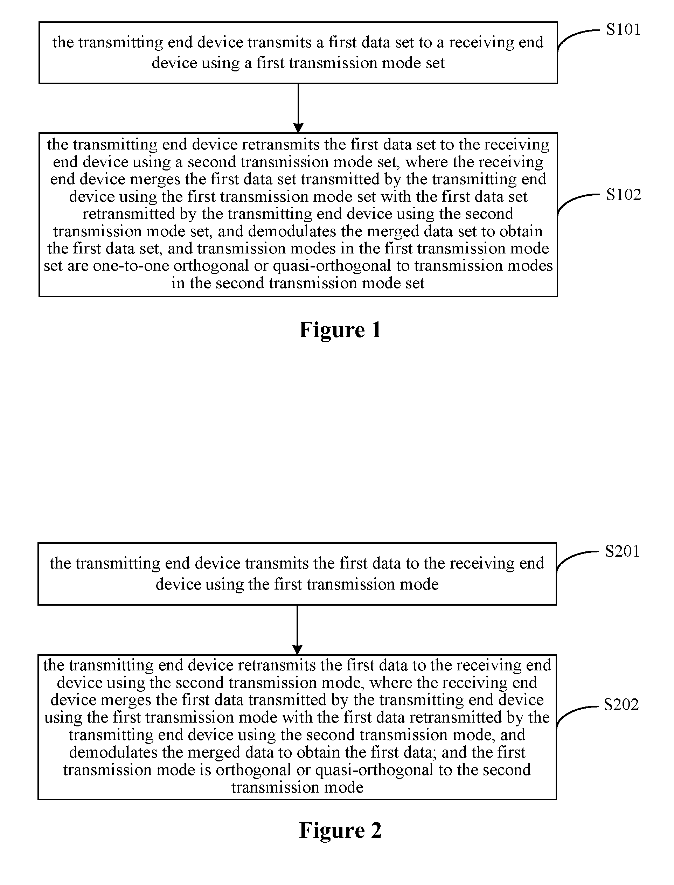

Figure 1 is a flow chart of a data retransmission method according to a first embodiment of the invention. In the first embodiment, the execution subject is a transmitting end device. As shown in Figure 1, the method according to this embodiment includes the follows.

In step S101, the transmitting end device transmits a first data set to a receiving end device using a first transmission mode set.

Particularly, each of the transmitting end device and the receiving end device in this embodiment may be a network end device such as a base station, or a user end device such as a cell phone. The method in this embodiment includes operations performed by the transmitting end device. The type of the transmitting end device is not limited in this embodiment, so long as it performs the operation of the transmitting end device. The transmitting end device in this embodiment can provide at least two transmission mode sets, each of which includes at least one transmission mode. The first data set transmitted by the transmitting end device to the receiving end device includes at least one data segment. In particular, in a case that the transmitting end device transmits the first data set to the receiving end device using the first transmission mode set, one data segment in the first data set is transmitted using one transmission mode in the first transmission mode set. That is, the number of the transmission modes in the first transmission mode set is not less than the number of the data segments in the first data set. Accordingly, the receiving end device is required to receive the first data set, using a reception mode set consisting of reception modes which correspond to the transmission modes in the transmission mode set.

In step S102, the transmitting end device retransmits the first data set to the receiving end device using a second transmission mode set, where the receiving end device merges the first data set transmitted by the transmitting end device using the first transmission mode set with the first data set retransmitted by the transmitting end device using the second transmission mode set, and demodulates the merged data set to obtain the first data set; and transmission modes in the first transmission mode set are one-to-one orthogonal or quasi-orthogonal to transmission modes in the second transmission mode set.

Particularly, due to influencing factors such as fading or disturbances in the wireless network, the first data set transmitted by the transmitting end device to the receiving end device using the first transmission mode set can not be received by the receiving end device, or the first data set received by the receiving end device can not be demodulated normally because of a high error rate. In this case, the transmitting end device may retransmit the first data set to the receiving end device using the second transmission mode set. Transmission modes in the second transmission mode set are one-to-one orthogonal or quasi-orthogonal to transmission modes in the first transmission mode set. Since fading or disturbances in the wireless network relate to transmission modes of the data, data in different transmission modes may be subject to different fading or disturbances. When the receiving end device can not normally receive the first data set transmitted by the transmitting end device using the first transmission mode set, the first data set retransmitted by the transmitting end device using the second transmission mode set can be received by the receiving end device, where transmission modes in the second transmission mode set are one-to-one orthogonal or quasi-orthogonal to transmission modes in the first transmission mode set. Accordingly, the receiving end device is required to receive the retransmitted first data set using a second reception mode set which includes reception modes corresponding to the transmission modes in the second transmission mode set. After receiving the first data sets transmitted at two times, the receiving end device merges the first data set transmitted by the transmitting end device using the first transmission mode set with the first data set retransmitted by the transmitting end device using the second transmission mode set, and demodulates the merged data set to obtain the first data set. By merging the first data sets transmitted using orthogonal or quasi-orthogonal transmission modes, fading and disturbances suffered by the first data set at two transmission processes may be eliminated. Thus, the complete first data set may be acquired by the receiving end device demodulating the merged data set.

In this embodiment, the transmitting end device transmits the first data set to the receiving end device using the first transmission mode set, and then retransmits the first data set to the receiving end device using the second transmission mode set. The receiving end device merges first data sets received at two times and demodulates the merged data set to obtain the first data set. Since transmission modes in the first transmission mode set are one-to-one orthogonal or quasi-orthogonal to transmission modes in the second transmission mode set, first data sets transmitted at two times are subject to different fading and disturbances. Fading and disturbances suffered by the first data set can be eliminated by the receiving end device merging the first data sets received at two times, thereby improving data retransmission performance in wireless networks.

It should be noted that, in a case that the transmitting end device transmits the first data set to the receiving end device using the first transmission mode set and the receiving end device normally receives the first data set, the receiving end device may transmit a first data set reception feedback massage to the transmitting end device. The transmitting end device may retransmit the first data set to the receiving end device using the second transmission mode set in two scenarios. In a first scenario, the transmitting end device retransmits the first data set to the receiving end device using the second transmission mode set on receiving a first data set retransmission request transmitted by the receiving end device. In a second scenario, the transmitting end device retransmits the first data set to the receiving end device using the second transmission mode set, in a case that no first data set reception feedback message transmitted by the receiving end device is received by the transmitting end device in a predetermined time period. In the first scenario, after the transmitting end device transmits the first data set to the receiving end device using the first transmission mode set, the receiving end device determines that the first data set has a high error rate, and then transmits the first data set retransmission request message to the transmitting end device. The transmitting end device retransmits the first data set to the receiving end device using the second transmission mode set on receiving the first data set retransmission request message. In the second scenario, after the transmitting end device transmits the first data set to the receiving end device using the first transmission mode set, the receiving end device can not transmit the first data set reception feedback message to the transmitting end device if the first data set is not normally received by the receiving end device. The transmitting end device retransmits the first data set to the receiving end device using the second transmission mode set, in the case that no first data set reception feedback message transmitted by the receiving end device is received by the transmitting end device in a predetermined time period.

In the data retransmission method provided according to the embodiment of the invention, the first transmission mode set includes at least one transmission mode, and the second transmission mode set includes at least one transmission mode. In the following, a case where each of the first transmission mode set and the second transmission mode set includes one transmission mode and a case where each of the first transmission mode set and the second transmission mode set includes two transmission modes are taken as examples respectively to further describe the embodiment shown in Figure 1.

Figure 2 is a flow chart of a data retransmission method according to a second embodiment of the invention. The method according to the embodiment is based on the embodiment shown in Figure 1, in which the first transmission mode set includes a first transmission mode, the second transmission mode set includes a second transmission mode, and the first data set includes first data. As shown in Figure 2, the method according to this embodiment includes the following.

In step S201, the transmitting end device transmits the first data to the receiving end device using the first transmission mode.

Particularly, in this embodiment, the transmitting end device is required to transmit only one data stream, i.e., the first data. Therefore, the transmitting end device is required to use only one transmission mode to transmit the first data, where the transmitting end device may provide at least two transmission modes. The transmitting end device transmits the first data to the receiving end device using the first transmission mode. Accordingly, the receiving end device is required to receive the first data using a first reception mode corresponding to the first transmission mode.

In step S202, the transmitting end device retransmits the first data to the receiving end device using the second transmission mode, where the receiving end device merges the first data transmitted by the transmitting end device using the first transmission mode with the first data retransmitted by the transmitting end device using the second transmission mode, and demodulates the merged data to obtain the first data; and the first transmission mode is orthogonal or quasi-orthogonal to the second transmission mode.

Particularly, due to influencing factors such as fading or disturbances in the wireless network, the first data, transmitted by the transmitting end device to the receiving end device using the first transmission mode, may not be received by the receiving end device; or the first data received by the receiving end device can not be demodulated normally because of a high error rate. In this case, the transmitting end device may retransmit the first data to the receiving end device using the second transmission mode. The second transmission mode is orthogonal or quasi-orthogonal to the first transmission mode. Since fading or disturbances in the wireless network relate to transmission modes of the data, data in different transmission modes may be subject to different fading or disturbances. When the receiving end device can not normally receive the first data transmitted by the transmitting end device using the first transmission mode, the first data retransmitted by the transmitting end device using the second transmission mode can be received by the receiving end device, where the second transmission mode is orthogonal or quasi-orthogonal to the first transmission mode. Accordingly, the receiving end device is required to receive the retransmitted first data using a second reception mode corresponding to the second transmission mode. After receiving the first data transmitted at two times, the receiving end device merges the first data transmitted by the transmitting end device using the first transmission mode with the first data retransmitted by the transmitting end device using the second transmission mode, and demodulates the merged data to obtain the first data. By merging the first data transmitted using orthogonal or quasi-orthogonal transmission modes, fading and disturbances suffered by the first data at two transmission processes may be eliminated. Thus, the complete first data may be acquired by the receiving end device demodulating the merged data.

In this embodiment, the transmitting end device transmits the first data to the receiving end device only using the first transmission mode, and retransmits the first data to the receiving end device only using the second transmission mode orthogonal or quasi-orthogonal to the first transmission mode. Therefore, there are no particular requirements regarding the transmitting end device and the receiving end device as long as the transmitting end device and the receiving end device can perform data transmission using at least two transmission modes.

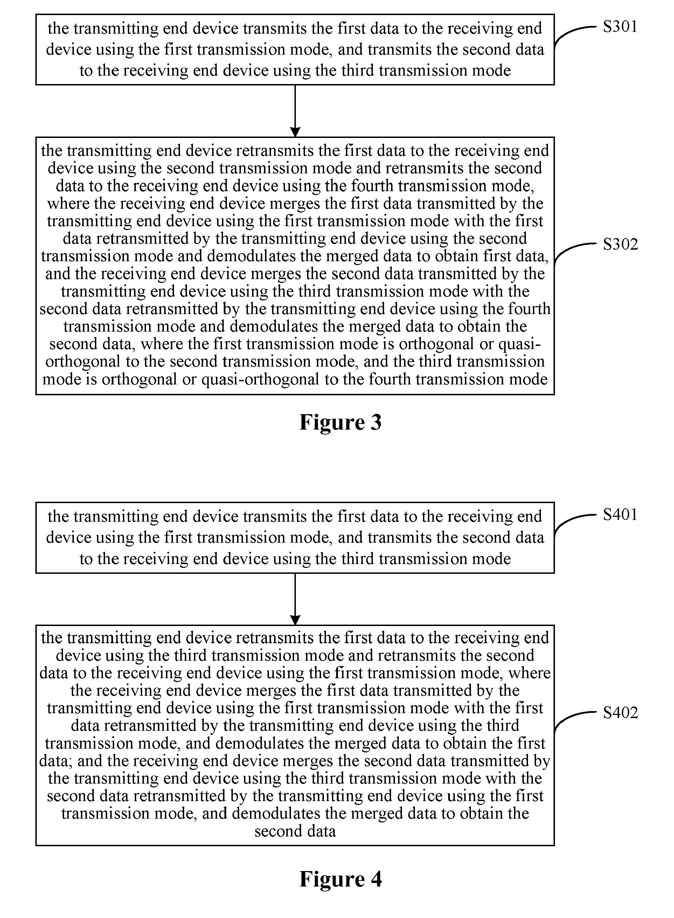

Figure 3 is a flow chart of a data retransmission method according to a third embodiment of the invention. The method according to the embodiment is based on the embodiment shown in Figure 1, in which the first transmission mode set includes a first transmission mode and a third transmission mode, the second transmission mode set includes a second transmission mode and a fourth transmission mode, and the first data set includes first data and second data. As shown in Figure 3, the method according to this embodiment includes the following.

In step S301, the transmitting end device transmits the first data to the receiving end device using the first transmission mode, and transmits the second data to the receiving end device using the third transmission mode.

Particularly, the transmitting end device in this embodiment is required to transmit two data streams, i.e., the first data and the second data. Since one transmission mode can only be used to transmit one data stream, the transmitting end device is required to transmit the first data and the second data using two transmission modes respectively. In this embodiment, the transmitting end device transmits the first data using the first transmission mode and transmits the second data using the third transmission mode. Accordingly, the receiving end device is required to receive the first data using a first reception mode corresponding to the first transmission mode, and receive the second data using a third reception mode corresponding to the third transmission mode.

In step S302, the transmitting end device retransmits the first data to the receiving end device using the second transmission mode and retransmits the second data to the receiving end device using the fourth transmission mode, where the receiving end device merges the first data transmitted by the transmitting end device using the first transmission mode with the first data retransmitted by the transmitting end device using the second transmission mode and demodulates the merged data to obtain first data, and the receiving end device merges the second data transmitted by the transmitting end device using the third transmission mode with the second data retransmitted by the transmitting end device using the fourth transmission mode and demodulates the merged data to obtain the second data, and where the first transmission mode is orthogonal or quasi-orthogonal to the second transmission mode, and the third transmission mode is orthogonal or quasi-orthogonal to the fourth transmission mode.

Particularly, due to influencing factors such as fading or disturbances in the wireless network, the first data transmitted by the transmitting end device to the receiving end device using the first transmission mode and the second data transmitted by the transmitting end device to the receiving end device using the third transmission mode can not be received by the receiving end device; or the first data and the second data received by the receiving end device can not be demodulated normally because of high error rates. In this case, the transmitting end device may retransmit the first data to the receiving end device using the second transmission mode and retransmit the second data to the receiving end device using the fourth transmission mode. The second transmission mode is orthogonal or quasi-orthogonal to the first transmission mode, and the third transmission mode is orthogonal or quasi-orthogonal to the fourth transmission mode. Since fading or disturbances in the wireless network relate to transmission modes of the data, data in different transmission modes may be subject to different fading or disturbances. When the receiving end device can not normally receive the first data transmitted by the transmitting end device using the first transmission mode and the second data transmitted by the transmitting end device using the third transmission mode, the first data retransmitted by the transmitting end device using the second transmission mode and the second data retransmitted by the transmitting end device using the fourth transmission mode can be received by the receiving end device, where the second transmission mode is orthogonal or quasi-orthogonal to the first transmission mode, and the fourth transmission mode is orthogonal or quasi-orthogonal to the third transmission mode. Accordingly, the receiving end device is required to receive the retransmitted first data using a second reception mode corresponding to the second transmission mode, and receive the retransmitted first data using a fourth reception mode corresponding to the fourth transmission mode. After receiving the first data transmitted at two times, the receiving end device merges the first data transmitted by the transmitting end device using the first transmission mode with the first data retransmitted by the transmitting end device using the second transmission mode and demodulates the merged data to obtain the first data. After receiving the second data transmitted at two times, the receiving end device merges the second data transmitted by the transmitting end device using the third transmission mode with the second data retransmitted by the transmitting end device using the fourth transmission mode and demodulates the merged data to obtain the second data. By merging each of the first data and the second data transmitted using orthogonal or quasi-orthogonal transmission modes, fading and disturbances suffered by the first data and the second data, both of which are transmitted at two times respectively, may be eliminated. Thus, the complete first data and the complete second data may be acquired by the receiving end device demodulating the merged data.

In the embodiment shown in Figure 2, a case where each of the first transmission mode set and the second transmission mode set includes one transmission mode is taken as an example to describe the data retransmission method provided according to the embodiment of the invention. In the embodiment shown in Figure 3, a case where each of the first transmission mode set and the second transmission mode set includes two transmission modes is taken as an example to describe the data retransmission method provided according to the embodiment of the invention. However, the data retransmission method provided according to the embodiments of the invention is not limited thereto, a case where each of the first transmission mode set and the second transmission mode set includes more than two transmission modes and more than two data streams may be transmitted is similar to the embodiments described above, which will not be described herein.

Figure 4 is a flow chart of a data retransmission method according to a fourth embodiment of the invention. The method according to the embodiment is based on the embodiment shown in Figure 3, in which the first transmission mode is orthogonal or quasi-orthogonal to the third transmission mode. As shown in Figure 4, the method according to this embodiment includes the following.

In step S401, the transmitting end device transmits the first data to the receiving end device using the first transmission mode, and transmits the second data to the receiving end device using the third transmission mode.

Particularly, this step is the same as step S301.

In step S402, the transmitting end device retransmits the first data to the receiving end device using the third transmission mode and retransmits the second data to the receiving end device using the first transmission mode, where the receiving end device merges the first data transmitted by the transmitting end device using the first transmission mode with the first data retransmitted by the transmitting end device using the third transmission mode, and demodulates the merged data to obtain the first data; and the receiving end device merges the second data transmitted by the transmitting end device using the third transmission mode with the second data retransmitted by the transmitting end device using the first transmission mode, and demodulates the merged data to obtain the second data.

Particularly, on the basis of the embodiment shown in Figure 3, in this embodiment, the first transmission mode is orthogonal or quasi-orthogonal to the third transmission mode. In step S302 of the embodiment shown in Figure 3, the second transmission mode used to retransmit the first data is orthogonal or quasi-orthogonal to the first transmission mode, and the fourth transmission mode used to retransmit the second data is orthogonal or quasi-orthogonal to the third transmission mode. Therefore, by using the third transmission mode to retransmit the first data and using the first transmission mode to retransmit the second data, the same effect as the embodiment shown in Figure 3 can be achieved. Accordingly, the receiving end device is required to receive the retransmitted first data using a third reception mode corresponding to the third transmission mode, and receive the retransmitted first data using a first reception mode corresponding to the first transmission mode. After receiving the first data transmitted at two times, the receiving end device merges the first data transmitted by the transmitting end device using the first transmission mode with the first data retransmitted by the transmitting end device using the third transmission mode, and demodulates the merged data to obtain the first data. After receiving the second data transmitted at two times, the receiving end device merges the second data transmitted by the transmitting end device using the third transmission mode with the second data retransmitted by the transmitting end device using the first transmission mode, and demodulates the merged data to obtain the second data. By merging each of the first data and the second data transmitted using orthogonal or quasi-orthogonal transmission modes, fading and disturbances suffered by the first data and the second data, both of which are transmitted at two times, may be eliminated. Thus, the complete first data and the complete second data may be acquired by the receiving end device demodulating the merged data.

In this embodiment, the first transmission mode set with the orthogonal or quasi-orthogonal transmission modes is selected, and the first data set is transmitted using the orthogonal or quasi-orthogonal transmission modes. Thus, the first transmission mode set may also be used to retransmit the first data set only by interchanging transmission modes to transmit different data in the first data set. In this way, transmission and retransmission of data may be performed using only one transmission mode set, and thus the system resources are saved.

In the embodiments shown in Figure 2 to Figure 4, the transmitting end device is required to transmit the first data set using the first transmission mode set and retransmit the first data set using the second transmission mode set, where transmission modes in the first transmission mode set are one-to-one orthogonal or quasi-orthogonal to transmission modes in the second transmission mode set. In the embodiment shown in Figure 2, in the case that the first data set includes only one stream of data, the first data set are required to be transmitted and retransmitted using two orthogonal or quasi-orthogonal transmission modes respectively. In the embodiments shown in Figure 3 and Figure 4, in the case that the first data set includes two streams of data, the first data set are required to be transmitted and retransmitted using at least two orthogonal or quasi-orthogonal transmission modes. Therefore, in the data retransmission method provided according to the embodiments of the invention, the transmitting end device is required to include an antenna with adjustable transmission modes. The antenna with adjustable transmission modes includes at least two orthogonal or quasi-orthogonal transmission modes. Further, before transmitting the first data set to the receiving end device using the first transmission mode set, the transmitting end device is required to generate the first transmission mode set.

In the embodiments shown in Figure 1 to Figure 4, two orthogonal transmission modes indicate that the two transmission modes satisfy $\int g_1(\theta)g_2(\theta)d(\theta)d\theta=0$, where $g_1(\theta)$ indicates one of the transmission modes, and $g_2(\theta)$ indicates the other transmission mode. Two quasi-orthogonal transmission modes indicate that the two transmission modes satisfy $\int g_1(\theta)g_2(\theta)d\theta \leq e$ where $g_1(\theta)$ indicates one of the transmission modes, $g_2(\theta)$ indicates the other transmission mode, and $e$ is a small predetermined threshold value. That is, the above embodiments may be implemented in a case that two transmission modes are orthogonal to each other, and the above embodiments may also be implemented in a case that a certain deviation exists in the orthogonal relationship between two transmission modes. The orthogonal relation between the reception modes is similar to that between the transmission modes, which will not be described herein.

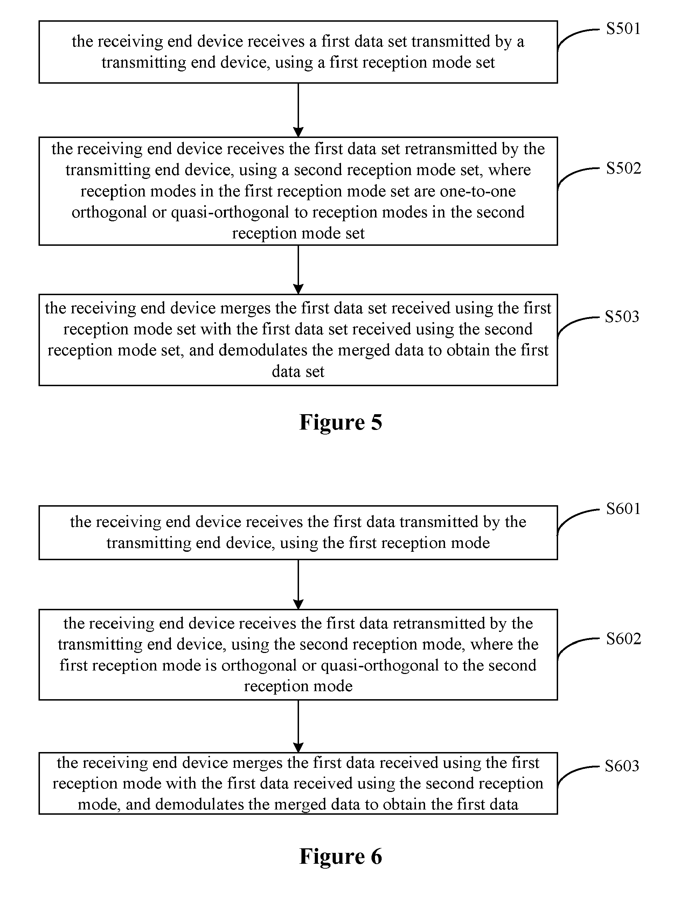

Figure 5 is a flow chart of a data retransmission method according to a fifth embodiment of the invention. In the embodiment, the execution subject is a receiving end device. As shown in Figure 5, the method according to this embodiment includes the following.

In step S501, the receiving end device receives a first data set transmitted by a transmitting end device, using a first reception mode set.

Particularly, each of the transmitting end device and the receiving end device in this embodiment may be a network end device such as a base station, or a user end device such as a cell phone. The method in this embodiment includes operations performed by the transmitting end device. The type of the receiving end device is not limited in this embodiment, so long as it performs the operation of the receiving end device. The receiving end device in this embodiment can provide at least two reception mode sets, each of which includes at least one reception mode. The first data set transmitted by the transmitting end device and received by the receiving end device includes at least one data segment. In particular, in a case that the receiving end device receives the first data set transmitted by the transmitting end device, using the first reception mode set, one data segment in the first data set is received using one reception mode in the first reception mode set. That is, the number of the reception modes in the first reception mode set is not less than the number of the data segments in the first data set. Accordingly, the transmitting end device is required to transmit the first data set using a transmission mode set consisting of transmission modes which correspond to the reception modes in the reception mode set.

In step S502, the receiving end device receives the first data set retransmitted by the transmitting end device, using a second reception mode set, where reception modes in the first reception mode set are one-to-one orthogonal or quasi-orthogonal to reception modes in the second reception mode set.

Particularly, due to influencing factors such as fading or disturbances in the wireless network, the first data set transmitted by the transmitting end device using the first transmission mode set can not be received by the receiving end device using the first reception mode set, or the first data set received by the receiving end device can not be demodulated normally because of a high error rate. In this case, the receiving end device may receive the first data set retransmitted by the transmitting end device using the second transmission mode set, using the second reception mode set. Reception modes in the second reception mode set are one-to-one orthogonal or quasi-orthogonal to reception modes in the first reception mode set. Since fading or disturbances in the wireless network relate to transmission modes of the data, data in different transmission modes may be subject to different fading or disturbances. When the receiving end device can not normally receive the first data set transmitted by the transmitting end device, using the first reception mode set, the receiving end device can receive the first data set retransmitted by the transmitting end device, using the second reception mode set, where reception modes in the second reception mode set are one-to-one orthogonal or quasi-orthogonal to reception modes in the first reception mode set. Accordingly, the transmitting end device is required to retransmit the first data set using a second transmission mode set, which includes transmission modes corresponding to the reception modes in the second reception mode set.

In step S503, the receiving end device merges the first data set received using the first reception mode set with the first data set received using the second reception mode set, and demodulates the merged data to obtain the first data set.

Particularly, after receiving the first data sets transmitted at two times, the receiving end device merges the first data set received using the first reception mode set with the first data set received using the second reception mode set, and demodulates the merged data set to obtain the first data set. By merging the first data sets received using orthogonal or quasi-orthogonal reception modes, fading and disturbances suffered by the first data set in two transmission processes may be eliminated, thus the complete first data set may be acquired by the receiving end device demodulating the merged data set.

In this embodiment, the receiving end device receives the first data set transmitted by the transmitting end device, using the first reception mode set; then receives the first data set retransmitted by the transmitting end device, using the second reception mode set; merges first data sets received at two times; and demodulates the merged data set to obtain the first data set. Since reception modes in the first reception mode set are one-to-one orthogonal or quasi-orthogonal to reception modes in the second reception mode set, first data sets received at two times are subject to different fading and disturbances. Fading and disturbances suffered by the first data set can be eliminated by the receiving end device merging the first data sets received at two times, thereby improving data retransmission performance in wireless networks.

It should be noted that, when the receiving end device receives using the first reception mode set the first data set transmitted by the transmission end device, the receiving end device may transmit a first data set reception feedback massage to the transmitting end device in a case of receiving the first data set normally. The receiving end device may receive the first data set retransmitted by the transmitting end device using the second reception mode set in two scenarios. In a first scenario, after receiving the first data set using the first reception mode set, the receiving end device transmits a first data set retransmission request to the transmitting end device. The receiving end device receives the first data set retransmitted by the transmitting end device, using the second reception mode set. In a second scenario, the receiving end device receives the first data set retransmitted by the transmitting end device, using the second reception mode set, in a case that the receiving end device does not transmit the first data set reception feedback message to the transmitting end device in a predetermined time period. In the first scenario, after receiving the first data set using the first reception mode set, the receiving end device determines that the first data set has a high error rate, and then transmits the first data set retransmission request message to the transmitting end device. The transmitting end device retransmits the first data set to the receiving end device using the second transmission mode set on receiving the first data set retransmission request message. The receiving end device receives the first data set retransmitted by the transmitting end device, using the second reception mode set. In the second scenario, after the transmitting end device transmits the first data set to the receiving end device using the first transmission mode set, the receiving end device can not transmit the first data set reception feedback message to the transmitting end device if the first data set is not normally received by the receiving end device. In the case that the receiving end device does not transmit the first data set reception feedback message to the transmitting end device in a predetermined time period, the transmitting end device retransmits the first data set to the receiving end device using the second transmission mode set; and the receiving end device receives the first data set retransmitted by the transmitting end device, using the second reception mode set.

In the data retransmission method provided according to the embodiments of the invention, the first reception mode set includes at least one reception mode, and the second reception mode set includes at least one reception mode. In the following, a case where each of the first reception mode set and the second reception mode set includes one reception mode and a case where each of the first reception mode set and the second reception mode set includes two reception modes are taken as examples respectively to further describe the embodiment shown in Figure 5.

Figure 6 is a flow chart of a data retransmission method according to a sixth embodiment of the invention. The method according to the embodiment is based on the embodiment shown in Figure 5, in which the first reception mode set includes a first reception mode, the second reception mode set includes a second reception mode, and the first data set includes first data. As shown in Figure 6, the method according to this embodiment includes the following.

In step S601, the receiving end device receives the first data transmitted by the transmitting end device, using the first reception mode.

Particularly, in this embodiment, the receiving end device is required to receive only one data stream, i.e., the first data. Therefore, the receiving end device is required to use only one reception mode to receive the first data, where the receiving end device may provide at least two reception modes. The receiving end device receives the first data transmitted by the transmitting end device, using the first reception mode. Accordingly, the transmitting end device is required to transmit the first data using a first transmission mode corresponding to the first reception mode.

In step S602, the receiving end device receives the first data retransmitted by the transmitting end device, using the second reception mode, where the first reception mode is orthogonal or quasi-orthogonal to the second reception mode.

Particularly, due to influencing factors such as fading or disturbances in the wireless network, the first data, transmitted by the transmitting end device using the first transmission mode, may not be received by the receiving end device using the first reception mode; or the first data received by the receiving end device can not be demodulated normally because of a high error rate. In this case, the receiving end device may receive the first data retransmitted by the transmitting end device using the second transmission mode, using the second reception mode. The second reception mode is orthogonal or quasi-orthogonal to the first reception mode. Since fading or disturbances in the wireless network relate to transmission modes of the data, data in different transmission modes may be subject to different fading or disturbances. When the receiving end device can not normally receive the first data transmitted by the transmitting end device using the first reception mode, the receiving end device can receive the first data retransmitted by the transmitting end device, using the second reception mode, where the second reception mode is orthogonal or quasi-orthogonal to the first reception mode. Accordingly, the transmitting end device is required to retransmit the first data using a second transmission mode corresponding to the second reception mode.

In step S603, the receiving end device merges the first data received using the first reception mode with the first data received using the second reception mode, and demodulates the merged data to obtain the first data.

Particularly, after receiving the first data transmitted at two times, the receiving end device merges the first data received using the first reception mode with the first data received using the second reception mode, and demodulates the merged data to obtain the first data. By merging the first data received using orthogonal or quasi-orthogonal reception modes, fading and disturbances suffered by the first data in two transmission processes may be eliminated. Thus, the complete first data may be acquired by the receiving end device demodulating the merged data.

In this embodiment, the receiving end device receives the first data transmitted by the transmitting end device, only using the first reception mode; and receives the first data retransmitted by the transmitting end device, only using the second reception mode orthogonal or quasi-orthogonal to the first reception mode. Therefore, there are no particular requirements regarding the receiving end device and the transmitting end device, as long as the receiving end device and the transmitting end device can perform data transmission using at least two transmission modes.

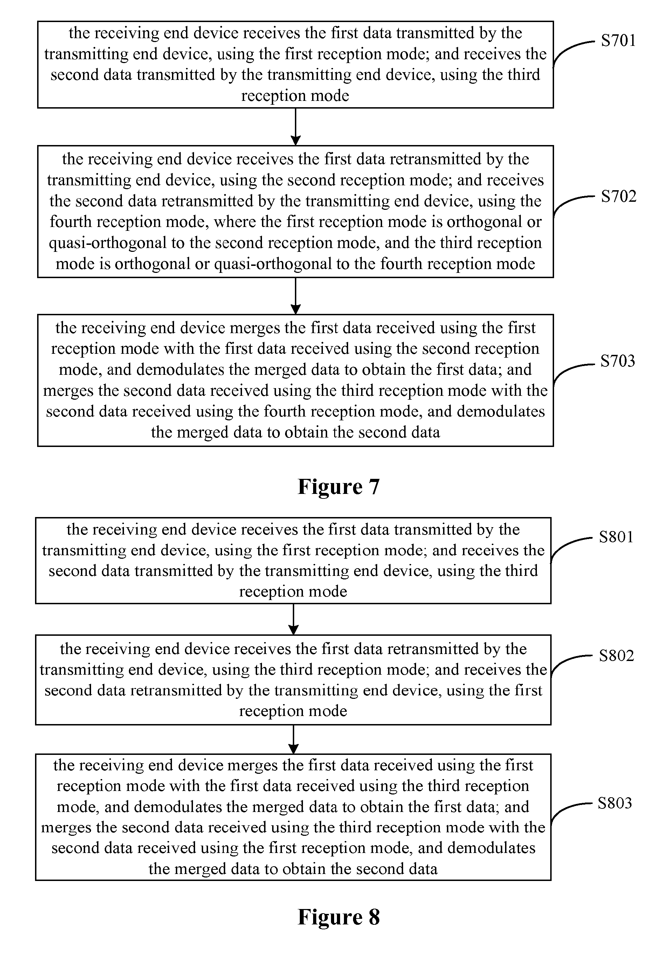

Figure 7 is a flow chart of a data retransmission method according to a seventh embodiment of the invention. The method according to the embodiment is based on the embodiment shown in Figure 5, in which the first reception mode set includes a first reception mode and a third reception mode, the second reception mode set includes a second reception mode and a fourth reception mode, and the first data set includes first data and second data. As shown in Figure 7, the method according to this embodiment includes the following.

In step S701, the receiving end device receives the first data transmitted by the transmitting end device, using the first reception mode; and receives the second data transmitted by the transmitting end device, using the third reception mode.

Particularly, the transmitting end device in this embodiment is required to transmit two data streams, i.e., the first data and the second data. Since one transmission mode can only be used to transmit one data stream, the transmitting end device is required to transmit the first data and the second data using two transmission modes respectively. In this embodiment, the transmitting end device transmits the first data using the first transmission mode and transmits the second data using the third transmission mode. Accordingly, the receiving end device is required to receive the first data using a first reception mode corresponding to the first transmission mode, and receive the second data using a third reception mode corresponding to the third transmission mode.

In step S702, the receiving end device receives the first data retransmitted by the transmitting end device, using the second reception mode; and receives the second data retransmitted by the transmitting end device, using the fourth reception mode, where the first reception mode is orthogonal or quasi-orthogonal to the second reception mode, and the third reception mode is orthogonal or quasi-orthogonal to the fourth reception mode.

Particularly, due to influencing factors such as fading or disturbances in the wireless network, the first data transmitted by the transmitting end device using the first transmission mode can not be received by the receiving end device using the first reception mode, and the second data transmitted by the transmitting end device using the third transmission mode can not be received by the receiving end device using the third reception mode; or the first data and the second data received by the receiving end device can not be demodulated normally because of high error rates. In this case, the receiving end device may receive the first data retransmitted by the transmitting end device using the second transmission mode, using the second reception mode; and receive the second data retransmitted by the transmitting end device using the fourth transmission mode, using the fourth reception mode. The second reception mode is orthogonal or quasi-orthogonal to the first reception mode, and the fourth reception mode is orthogonal or quasi-orthogonal to the third reception mode. Since fading or disturbances in the wireless network relate to transmission modes of the data, data in different transmission modes may be subject to different fading or disturbances. When the receiving end device can not normally receive the first data transmitted by the transmitting end device using the first reception mode, and can not normally receive the second data transmitted by the transmitting end device using the third reception mode, the receiving end device can receive the first data retransmitted by the transmitting end device, using the second reception mode which is orthogonal or quasi-orthogonal to the first reception mode; and receive the second data retransmitted by the transmitting end device, using the fourth reception mode which is orthogonal or quasi-orthogonal to the second reception mode. Accordingly, the transmitting end device is required to retransmit the first data using a second transmission mode corresponding to the second reception mode, and retransmit the second data using a fourth transmission mode corresponding to the fourth reception mode.

In step S703, the receiving end device merges the first data received using the first reception mode with the first data received using the second reception mode, and demodulates the merged data to obtain the first data; and merges the second data received using the third reception mode with the second data received using the fourth reception mode, and demodulates the merged data to obtain the second data.

Particularly, after receiving the first data transmitted at two times, the receiving end device merges the first data received using the first reception mode with the first data received using the second reception mode, and demodulates the merged data to obtain the first data. After receiving the second data transmitted at two times, the receiving end device merges the second data received using the third reception mode with the second data received using the fourth reception mode, and demodulates the merged data to obtain the second data. By merging each of the first data and the second data received using orthogonal or quasi-orthogonal reception modes, fading and disturbances suffered by the first data and the second data, both of which are transmitted at two times, may be eliminated. Thus, the complete first data and the complete second data may be acquired by the receiving end device demodulating the merged data.

In the embodiment shown in Figure 6, a case where each of the first reception mode set and the second reception mode set includes one reception mode is taken as examples to describe the data retransmission method provided according to the embodiment of the invention. In the embodiment shown in Figure 7, a case where each of the first reception mode set and the second reception mode set includes two reception modes is taken as examples to describe the data retransmission method provided according to the embodiment of the invention. However, the data retransmission method provided according to the embodiments of the invention is not limited thereto, a case where each of the first reception mode set and the second reception mode set includes more than two reception modes and more than two data streams may be transmitted is similar to the embodiments described above, which will not be described herein.

Figure 8 is a flow chart of a data retransmission method according to an eighth embodiment of the invention. The method according to the embodiment is based on the embodiment shown in Figure 7, in which the first reception mode is orthogonal or quasi-orthogonal to the third reception mode. As shown in Figure 8, the method according to this embodiment includes the following.

In step S801, the receiving end device receives the first data transmitted by the transmitting end device, using the first reception mode; and receives the second data transmitted by the transmitting end device, using the third reception mode.

Particularly, this step is the same as step S701.

In step S802, the receiving end device receives the first data retransmitted by the transmitting end device, using the third reception mode; and receives the second data retransmitted by the transmitting end device, using the first reception mode.

Particularly, on the basis of the embodiment shown in Figure 7, in this embodiment, the first reception mode is orthogonal or quasi-orthogonal to the third reception mode. In step S702 of the embodiment shown in Figure 7, the second reception mode, used by the receiving end device to receive the first data retransmitted by the transmitting end device, is orthogonal or quasi-orthogonal to the first reception mode; and the fourth reception mode, used by the receiving end device to receive the second data retransmitted by the transmitting end device, is orthogonal or quasi-orthogonal to the third reception mode. Therefore, by using the third reception mode to receive the retransmitted first data and using the first transmission mode to receive the retransmitted second data, the same effect as the embodiment shown in Figure 7 can be achieved. Accordingly, the transmitting end device is required to retransmit the first data using a third transmission mode corresponding to the third reception mode, and retransmit the second data using a first transmission mode corresponding to the first reception mode.

In step S803, the receiving end device merges the first data received using the first reception mode with the first data received using the third reception mode, and demodulates the merged data to obtain the first data; and merges the second data received using the third reception mode with the second data received using the first reception mode, and demodulates the merged data to obtain the second data.

Particularly, after receiving the first data transmitted at two times, the receiving end device merges the first data received using the first reception mode with the first data received using the third transmission mode, and demodulates the merged data to obtain the first data. After receiving the second data transmitted at two times, the receiving end device merges the second data received using the third reception mode with the second data received using the first transmission mode, and demodulates the merged data to obtain the second data. By merging each of the first data and the second data received using orthogonal or quasi-orthogonal reception modes, fading and disturbances suffered by the first data and the second data, both of which are transmitted at two times, may be eliminated. Thus, the complete first data and the complete second data may be acquired by the receiving end device demodulating the merged data.

In this embodiment, the first reception mode set with the orthogonal reception modes are selected, and the first data set is received using the orthogonal or quasi-orthogonal reception modes. Thus, the first reception mode set may be used to receive the retransmitted first data set only by interchanging reception modes to receive different data in the first data set. In this way, reception of transmitted data and reception of retransmitted data may be performed using only one reception mode set, and thus the system resources are saved.

In the embodiments shown in Figure 6 to Figure 8, the receiving end device is required to receive the first data set using the first reception mode set and receive the retransmitted first data set using the second reception mode set, where reception modes in the first reception mode set are one-to-one orthogonal or quasi-orthogonal to reception modes in the second reception mode set. In the embodiment shown in Figure 6, in the case that the first data set includes only one stream of data, the first data set and the retransmitted first data set are required to be received using two orthogonal or quasi-orthogonal reception modes. In the embodiments shown in Figure 7 and Figure 8, in the case that the first data set includes two streams of data, the first data set and the retransmitted first data set are required to be received using at least two orthogonal or quasi-orthogonal reception modes. Therefore, in the data retransmission method provided according to the embodiments of the invention, the receiving end device is required to include an antenna with adjustable reception modes. The antenna with adjustable reception modes includes at least two orthogonal or quasi-orthogonal reception modes. Further, before receiving the first data set transmitted by the transmitting end device using the first reception mode set, the receiving end device is required to generate the first reception mode set.

In the embodiments shown in Figure 5 to Figure 8, two orthogonal transmission modes indicate that the two transmission modes satisfy $\int \mathbf{g}_1(\theta)\mathbf{g}_2(\theta)d\theta=\theta$, where $\mathbf{g}_1(\theta)$ indicates one of the transmission modes, and $\mathbf{g}_2(\theta)$ indicates the other transmission mode. Two quasi-orthogonal transmission modes indicate that the two transmission modes satisfy $\int \mathbf{g}_1(\theta)\mathbf{g}_2(\theta)d\theta \leq e$ where $\mathbf{g}_1(\theta)$ indicates one of the transmission modes, $\mathbf{g}_2(\theta)$ indicates the other transmission mode, and e is a small predetermined threshold value. That is, the above embodiments may be implemented in a case that two transmission modes are orthogonal to each other, and the above embodiments may also be implemented in a case that a certain deviation exists in the orthogonal relationship between two transmission modes. The orthogonal relation between the reception modes is similar to that between the transmission modes, which will not be described herein.

In the embodiments shown in Figure 3 and Figure 4, a case that each of the first transmission mode set and the second transmission mode set includes two transmission modes, and the first data set includes two data segments is taken as an example to describe the transmitting end device for performing the data retransmission method according to the embodiments of the present invention. In the embodiments shown in Figure 7 and Figure 8, a case that each of the first reception mode set and the second reception mode set includes two reception modes, and the first data set includes two data segments is taken as an example to describe the receiving end device for performing the data retransmission method according to the embodiments of the present invention. The data retransmission method shown in each of Figure 3 and Figure 4, Figure 7 and Figure 8 is further described in conjunction with specific implementation scenarios.

A conventional multiple input multiple output (Multiple Input Multiple Output, MIMO) antenna technology can achieve additional power gain by transmission beamforming and reception beamforming, and hence can effectively compensate fading in the wireless environment. However, each of the antennas is required to connect with a radio frequency (Radio Frequency, RF) link to control the phase and amplitude, which may lead to a relatively high cost. In order to reduce costs, two antenna techniques are currently used: electronically steerable parasitic array radiator (Electronically Steerable Parasitic Array Radiator, ESPAR) antenna technique and electromagnetic band gap (Electromagnetic Band Gap, EBG) antenna technique.

The ESPAR antenna technique has following main characteristics: 1) a single active antenna and multiple parasitic antennas are included and only one RF link is required; 2) a transmission pattern and a reception pattern are adjusted based on mutual coupling among antenna dipoles by adjusting an adjustable load connected to parasitic antennas. The EBG antenna technique has following main characteristics: 1) an emission surface is formed by a single center dipole and multiple dipoles and only one RF link is required; 2) the lengths of dipoles and a reflection plane are adjusted by adjusting diode switches of transmission dipoles, so as to adjust a transmission pattern and a reception pattern. In general, in the ESPAR antenna technique and the EBG antenna technique, only one RF link is required, thereby providing simple construction and low cost. Further, the transmission pattern and the reception pattern may be adjusted by controlling a physical hardware circuit, so as to obtain a power gain.

In the ESPAR antenna technique and the EBG antenna technique, the transmission pattern and the reception pattern may be adjusted to produce multiple transmission modes. Therefore, the ESPAR antenna technique and the EBG antenna technique may be combined with the data retransmission method provided according to the embodiments of the invention to further improve system performance.

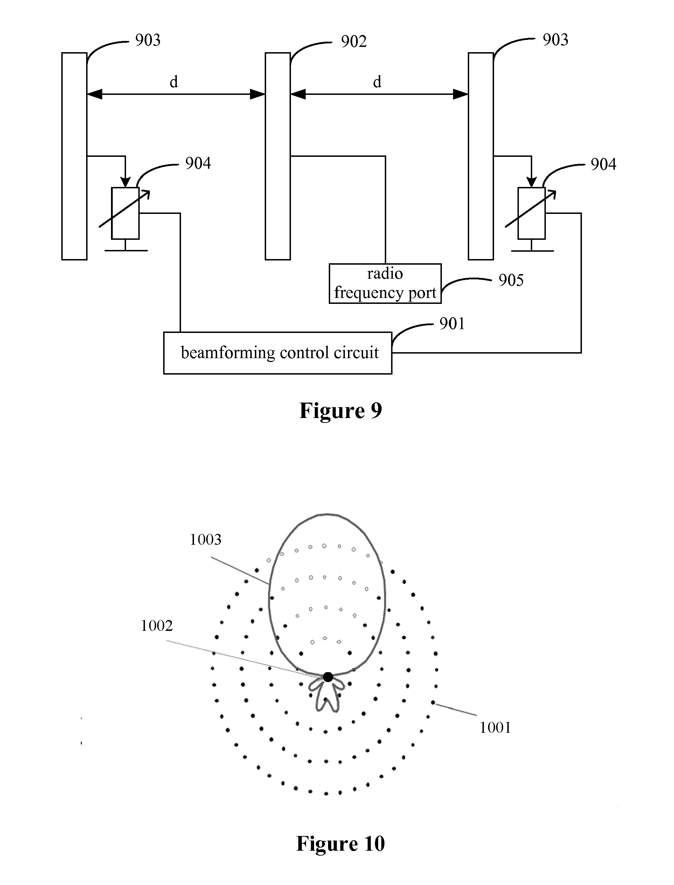

Figure 9 is a schematic structural diagram of an ESPAR antenna. As shown in Figure 9, the ESPAR antenna includes a beamforming control circuit 901, an active antenna 902, a parasitic antenna 903, a controllable load 904, and a radio frequency port 905.

The active antenna 902 is connected with an RF link via the radio frequency port 905, and the parasitic antenna 903 is connected with the RF link via the controllable load 904 and the beamforming control circuit 901. The ESPAR antenna includes a single active antenna 902 and multiple parasitic antennas 903. Each of the parasitic antennas 903 is connected with the beamforming control circuit 901 via a controllable load 904. The controllable load 904 is controlled by the beamforming control circuit 901. In this embodiment, two parasitic antennas 903 are taken as an example. However, the number of the parasitic antennas 903 is not limited thereto. Assuming that a distance between the active antenna 902 and the parasitic antenna 903 is d, an exit angle of a transmitting antenna is $\theta$ in a case that the antenna is used to the transmitting antenna, then the transmission pattern $G(\theta)$ of the antenna may be modeled by the following equation.

$$G(\theta) = v_s [1 \quad e^{-jkd\cos(\theta)} \quad e^{jkd\cos(\theta)}] (\mathbf{Z} + \mathbf{X})^{-1} \begin{bmatrix} 1 \\ 0 \\ 0 \end{bmatrix}$$

where $v_s$ is a signal transmitted to the active antenna 902, and $k = 2\pi/\lambda$, where $\lambda$ is a transmission wavelength.

$$\mathbf{Z} = \begin{bmatrix} z_{11} & z_{12} & z_{13} \\ z_{21} & z_{22} & z_{23} \\ z_{31} & z_{32} & z_{33} \end{bmatrix}$$

In the above equation, $z_{xy}$ indicates an impedance between an x-th antenna and a y-th antenna, where the active antenna 902 is a first antenna, a parasitic antenna 903 on the left is a second antenna, and a parasitic antenna 903 on the right is a third antenna. In the above equation, elements on the diagonal indicate self-impedances of antennas, and elements out of the diagonal indicate mutual impedances of antennas.

$$\mathbf{X} = \begin{bmatrix} 50 & 0 & 0 \\ 0 & jX_1 & 0 \\ 0 & 0 & jX_2 \end{bmatrix}$$

In the above equation, $jX_1$ and $jX_2$ respectively indicate adjustable reactance values of parasitic antennas, where $jX_1$ indicates a reactance value of a controllable load 904 connected with the parasitic antenna 903 on the left, and $jX_2$ indicates a reactance value of a controllable load 904 connected with the parasitic antenna 903 on the right.

The transmission pattern $G(\theta)$ may be controlled by controlling the reactance values of the controllable loads 904 connected with the parasitic antennas 903. This is known as transmission beamforming technique of the ESPAR antenna.

According to the reciprocal theory of the antenna pattern, in a case that the ESPAR antenna shown in Figure 5 operates in a reception mode, assuming that an incident angle of the receiving antenna is $\delta$, then an output voltage of the RF circuit is expressed by the following equation.

$$v_s(t) = \mathbf{w}^H \begin{bmatrix} 1 \\ e^{-jkd\cos(\delta)} \\ e^{jkd\cos(\delta)} \end{bmatrix} s(t)$$

where $\mathbf{w} = (\mathbf{Z}+\mathbf{X})^{-1}[100]^T$, $s(t)$ indicates an amplitude and a phase of a far-field current at the directional angle $\delta$. The weight vector w may be controlled by controlling the reactance value of the controllable load 904 connected with the parasitic antenna 903, thereby implementing the adjustment of the reception pattern. This is known as reception beamforming technique of the ESPAR antenna.

Figure 10 is a schematic structural diagram of an EBG antenna. As shown in Figure 10, the EBG antenna includes multiple dipoles 1001, and a field source 1002 locates at the center of an antenna array and connected with a RF link. The dipoles 1001 are distributed around the field source 1002 and connected with each other via diodes. The dipoles 1001 may be connected or disconnected by controlling the diode between the dipoles to switch on or off. When the diode between the dipoles 1001 is off, dipoles 1001 are connected to form a reflection surface, and an antenna beam is transmitted from unconnected dipoles 1001. Therefore, in the EBG antenna, On-off states of diodes between dipoles 1001 may be adjusted depending on actual transmission (reception) requirements, thereby implementing the adjustment of the transmission (reception) pattern. In Figure 10, solid spots indicate connected dipoles of dipoles 1001, and hollow spots indicate disconnected dipoles of dipoles 1001. The EBG antenna in Figure 10 may generate an antenna pattern indicated by a pattern 1003.

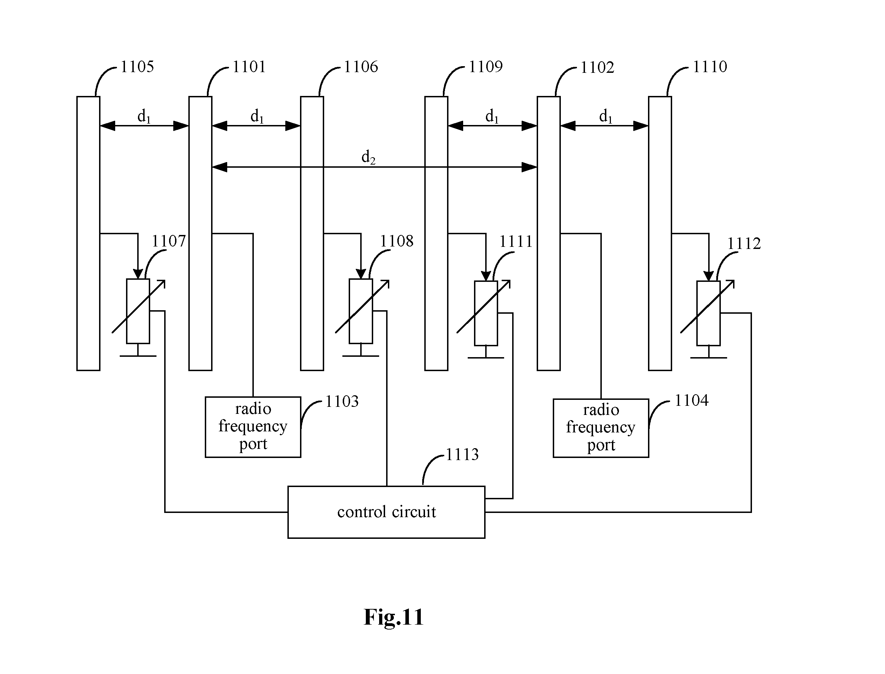

In the following, the ESPAR antenna technique is combined with the MIMO antenna technique to describe the data retransmission method provided according to the embodiments of the invention. Figure 11 is a schematic structural diagram of an antenna system configured to perform a data retransmission method according to a ninth embodiment of the invention. In Figure 11, the ESPAR antenna is combined with a two-input-two-output MIMO system, where each ESPAR antenna includes one active antenna and two parasitic antennas.

Assuming that a distance between an active antenna 1101 and an active antenna 1102 is $d_2$, the active antenna 1101 is connected with a radio frequency port 1103, the active antenna 1102 is connected with a radio frequency port 1104, and the active antenna 1101 and the active antenna 1102 transmit data streams independently. A parasitic antenna 1105 and a parasitic antenna 1106 are located next to the active antenna 1101. A distance between the active antenna 1101 and the parasitic antenna 1105 and a distance between the active antenna 1101 and the parasitic antenna 1106 are both $d_1$. The parasitic antenna 1105 is connected with a controllable load 1107 with a reactance value of $jX_1$. The parasitic antenna 1106 is connected with a controllable load 1108 with a reactance value of $jX_2$. A parasitic antenna 1109 and a parasitic antenna 1110 are located next to the active antenna 1102. A distance between the active antenna 1102 and the parasitic antenna 1109 and a distance between the active antenna 1102 and the parasitic antenna 1110 is both $d_1$. The parasitic antenna 1109 is connected with a controllable load 1111 with a reactance value of $jX_3$. The parasitic antenna 1110 is connected with a controllable load 1112 with a reactance value of $jX_4$. The controllable load 1107, the controllable load 1108, the controllable load 1111 and the controllable load 1112 are all connected with a control circuit 1113. The active antenna 1101 transmits data $s_1$, and the active antenna 1102 transmits data $s_2$. The transmission pattern $G(\theta)$ of the antenna may be modeled by the following equation.

$$\begin{aligned} G(\theta) &= \mathbf{a}_T(\theta)\mathbf{w}[s_1 \ \ 0 \ \ 0 \ \ s_2 \ \ 0 \ \ 0]^T \\ &= \mathbf{a}_T(\theta)[\mathbf{w}(1) \ \ \mathbf{w}(4)][s_1 \ \ s_2]^T \\ &= \mathbf{a}_T(\theta)[\mathbf{g}_1 \ \ \mathbf{g}_2][s_1 \ \ s_2]^T \end{aligned}$$

where

$$\mathbf{a}_T(\theta) = [e^{-jkd_1\cos(\theta)} \ \ 1 \ \ e^{-j2kd_1\cos(\theta)} \quad e^{-jk(d_1+d_2)\cos(\theta)} \quad e^{-jkd_2\cos(\theta)} \quad e^{-jk(2d_1+d_2)\cos(\theta)}] \quad ;$$

$\mathbf{w} = (\mathbf{Z} + \mathbf{X})^{-1}$, where $\mathbf{w}(1)$ is a first column of w, and $\mathbf{w}(4)$ is a fourth column of w; $\mathbf{g}_1 = \mathbf{w}(1)$ is an adjustable vector of data $s_1$, and $\mathbf{g}_2 = \mathbf{w}(4)$ is an adjustable vector of data $s_2$;

$$\mathbf{Z} = \begin{bmatrix} z_{11} & z_{12} & z_{13} & z_{14} & z_{15} & z_{16} \\ z_{21} & z_{22} & z_{23} & z_{24} & z_{25} & z_{26} \\ z_{31} & z_{32} & z_{33} & z_{34} & z_{35} & z_{36} \\ z_{41} & z_{42} & z_{43} & z_{44} & z_{45} & z_{46} \\ z_{51} & z_{52} & z_{53} & z_{54} & z_{55} & z_{56} \\ z_{61} & z_{62} & z_{63} & z_{64} & z_{65} & z_{66} \end{bmatrix}$$

$z_{xy}$ indicates an impedance between an x-th antenna and a y-th antenna, the active antenna 1101 is a first antenna, the parasitic antenna 1105 is a second antenna, the parasitic antenna 1106 is a third antenna, the active antenna 1102 is a fourth antenna, the parasitic antenna 1109 is a fifth antenna, the parasitic antenna 1110 is a sixth antenna. In the above equation, elements on the diagonal indicate self-impedances of antennas, and elements out of the diagonal indicate mutual impedances of antennas.

$$\mathbf{X} = \begin{bmatrix} 50 & 0 & 0 & 0 & 0 & 0 \\ 0 & jX_1 & 0 & 0 & 0 & 0 \\ 0 & 0 & jX_2 & 0 & 0 & 0 \\ 0 & 0 & 0 & 50 & 0 & 0 \\ 0 & 0 & 0 & 0 & jX_3 & 0 \\ 0 & 0 & 0 & 0 & 0 & jX_4 \end{bmatrix}$$

It is assumed that a mutual coupling between antennas is not considered, the channel transmission matrix may be modeled by the following equation.

$$\widetilde{\mathbf{H}} = \mathbf{H}[\mathbf{g}_1 \quad \mathbf{g}_2] \qquad (1)$$

where **H** is a channel without the mutual coupling, given the system includes *K* paths, an exit angle of an *i-th* path is $\theta_{T,i}$, an incident angle of the *i-th* path is $\theta_{R,i}$, and a path gain is $b_i$, then **H** may be modeled by the following equation.

$$\mathbf{H} = \sum_{i=1}^{K} b_i \mathbf{a}_R(\theta_{R,i}) \mathbf{a}_T^H(\theta_{T,i}) \qquad (2)$$

Based on the equation (1), the correlation between channels may be changed by adjusting the vector $\mathbf{g}_1$ of the data $s_1$ and the vector $\mathbf{g}_2$ of the data $s_2$, thereby enhancing the system capacity and performance. A transmission mode for transmitting data $s_1$ may be orthogonal to a transmission mode for transmitting data $s_2$ by making $\int \mathbf{g}_1(\theta)\mathbf{g}_2(\theta)d\theta = 0$. The transmission mode for transmitting data $s_1$ may be quasi-orthogonal to the transmission modes for transmitting data $s_2$, when $\int \mathbf{g}_1(\theta)\mathbf{g}_2(\theta)d\theta \leq e$, where e is a predetermined small threshold value.

It should be noted that Figure 11 is the schematic structural diagram of the antenna system of the transmitting end device. The antenna system of the receiving end device has a similar structure as that of the transmitting end device, which only has a different transmission/reception direction of data from the antenna system of the transmission end device. Thus, the antenna system of the receiving end device will not be described herein.

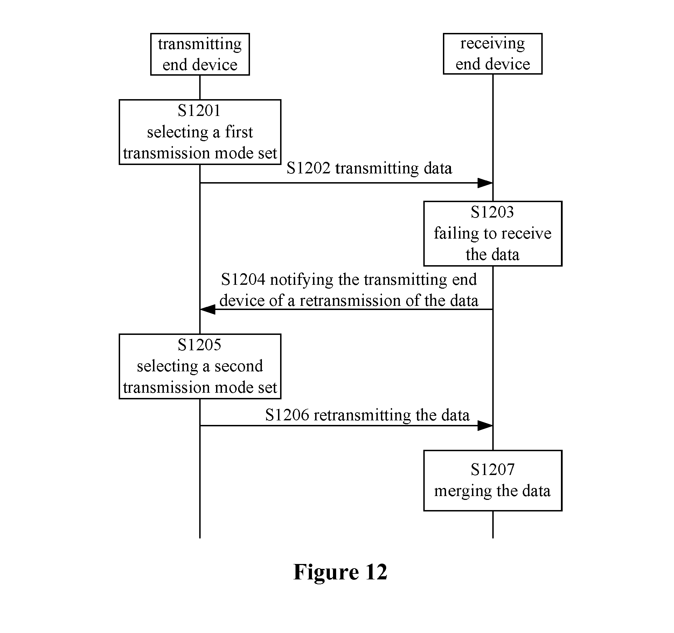

Figure 12 is a signaling flow chart of the data retransmission method according to the ninth embodiment of the invention. The data retransmission method in this embodiment is on the basis of the antenna system shown in Figure 11. As shown in Figure 12, the data retransmission method in this embodiment includes the following.

In step S1201, a transmitting end device selects a first transmission mode set.

Particularly, based on the above description, the antenna system shown in Figure 11 may transmit two stream

of data $s_1$ and $s_2$. Multiple groups of mutually orthogonal transmission modes used to transmit the data $s_1$ and data $s_2$ may be obtained by adjusting the vector $\mathbf{g}_1$ and the vector $\mathbf{g}_2$. It is assumed that the antenna of the transmitting end device have $N$ groups of transmission modes, which is $\mathbf{g}_i(\theta) = [g_i^{[1]}(\theta) \quad g_i^{[2]}(\theta)]$, where $i$ = 1, 2,$\cdots$, $N$. $g_i^{[1]}$ corresponds to a transmission mode corresponding to the active antenna 1101 (the data $s_1$), and $g_i^{[2]}$ corresponds to the transmission mode corresponding to the active antenna 1102 (the data $s_2$).

In this step, the first data set includes the data $s_1$ and the data $s_2$. In the *n-th* transmission of the data, the transmitting end device selects the transmission mode $\mathbf{g}_n(\theta) = [g_k^{[1]}(\theta) \quad g_k^{[2]}(\theta)]$ to transmit the data $s_1$ and $s_2$, where $k$ = 1,2,$\cdots$, $N$, and $n$ = 1,2,$\cdots$. That is, the transmitting end device may select any one of N groups of transmission modes provided by the antenna of the transmitting end device, to transmit the data $s_1$ and the data $s_2$.

In step S1202, the transmitting end device transmits data to a receiving end device.

Particularly, the transmitting end device transmits the data to the receiving end device using the selected transmission mode set $\mathbf{g}_n(\theta) = [g_n^{[1]}(\theta) \quad g_n^{[2]}(\theta)]$. The n-th group data received by the receiving end device may be expressed as the following equation.

$$\mathbf{r}_n = \left[ \begin{array}{cc} h_{11}^n & h_{12}^n \\ h_{21}^n & h_{22}^n \end{array} \right] \left[ \begin{array}{c} s_1 \\ s_2 \end{array} \right] + \mathbf{W}_n$$

where $\mathbf{r}_n$ is a signal received by the receiving end device in the n-th transmission; $h_{ij}^n$ represents a channel from a *j-th* transmitting antenna to an *i-th* receiving antenna in the n-th transmission, where $i,j$ = 0,1; $s_1$ and $s_2$ are two streams of data transmitted by the transmitting end device; and $\mathbf{W}_n$ is a noise of the receiving end device.

In step S1203, the receiving end device fails to receive the data.

In step S1204, the receiving end device notifies the transmitting end device of a retransmission of the data.

Particularly, after receiving the data transmitted by the transmitting end device using the transmission mode set $\mathbf{g}_n(\theta)$, the receiving end device determines, with check methods such as cyclic redundancy check (Cyclic Redundancy Check, CRC), that errors exist in the data $s_1$ and the data $s_2$ transmitted by the transmitting end device, or that the data $s_1$ and the data $s_2$ have high error rates; and then transmits a data retransmission request to the transmitting end device, to request the transmitting end device to retransmit the data $s_1$ and the data $s_2$. Alternatively, after transmitting the data $s_1$ and the data $s_2$, the transmitting end device actively retransmits the data $s_1$ and the data $s_2$, in a case that a feedback massage transmitted by the receiving end device is not received in a predetermined time period.

In step S1205, the transmitting end device selects a second transmission mode set.

Particularly, in an n+1-th transmission, the transmitting end device retransmits the data transmitted in the n-th transmission. The transmitting end device selects a transmission mode $\mathbf{g}_{n+1}(\theta) = [g_l^{[1]}(\theta) \quad g_l^{[2]}(\theta)]$, different from the transmission mode $\mathbf{g}_n(\theta)$, to transmit the data $s_1$ and the data $s_2$, where $l$ = 1,2,$\cdots$, $N$. $\mathbf{g}_{n+1}(\theta)$ may be selected with the following two methods.

In a first method, $k = l$, $g_l^{[1]}(\theta) = g_k^{[2]}(\theta)$, and $g_l^{[2]}(\theta) = g_k^{[1]}(\theta)$. and $g_l^{[2]}(\theta) = g_k^{[1]}(\theta)$. Actually, in the first method, the antenna for transmitting the data $s_1$ and the antenna for transmitting the data $s_2$ are exchanged. Unlike a conventional antenna rotating method, a base band signal processing procedure does not need to be changed when the antennas are exchanged. In this case, instead of selecting a new transmission mode, the transmission mode used to transmit the data $s_1$ in the n-th transmission is used to transmit the data $s_2$ while the transmission mode used to transmit the data $s_2$ in the n-th transmission is used to transmit the data $s_1$, in the n+1-th transmission of the data.

In a second method, $k \neq l$, $g_k^{[1]}(\theta) \perp g_k^{[2]}(\theta) \perp g_l^{[1]}(\theta) \perp g_l^{[2]}(\theta)$, where $\perp$ indicates orthogonality. Similarly, the base band signal processing procedure does not need to be changed when the transmission mode of the antenna is selected. In this case, another transmission mode set needs to be selected from the N groups of transmission modes provided by the antenna of the transmitting end device. In the new transmission mode set, $\tilde{g}_k^{[1]}(\theta)$ is orthogonal to

any one of $g_i^{[1]}(\theta)$ and $g_i^{[2]}(\theta)$, and $g_k^{[2]}(\theta)$ is orthogonal to the other one of $g_i^{[1]}(\theta)$ and $g_i^{[2]}(\theta)$. It should be noted that, in this embodiment, a case where $g_k^{[1]}(\theta)$ is orthogonal to any one of $g_i^{[1]}(\theta)$ and $g_i^{[2]}(\theta)$, and $g_k^{[2]}(\theta)$ is orthogonal to the other one of $g_i^{[1]}(\theta)$ and $g_i^{[2]}(\theta)$ is described, but the data retransmission method provided according to the embodiments of the invention is not limited thereto. The data retransmission method in this embodiment can also be implemented in a case that $g_k^{[1]}(\theta)$ is quasi-orthogonal to any one of $g_i^{[1]}(\theta)$ and $g_i^{[2]}(\theta)$, and $g_k^{[2]}(\theta)$ is quasi-orthogonal to the other one of $g_i^{[1]}(\theta)$ and $g_i^{[2]}(\theta)$.

In step S1206, the transmitting end device retransmits the data.

Particularly, the transmitting end device retransmits the data $s_1$ and the data $s_2$ using the transmission mode set selected in step S1205.

In step S1207, the receiving end device merges the data.

Particularly, the n+1 set of data received by the receiving end device may be expressed by the following equation.

$$\mathbf{r}_{n+1} = \begin{bmatrix} h_{11}^{n+1} & h_{12}^{n+1} \\ h_{21}^{n+1} & h_{22}^{n+1} \end{bmatrix} \begin{bmatrix} s_1 \\ s_2 \end{bmatrix} + \mathbf{W}_{n+1}$$

where $r_{n+1}$ is a signal received by the receiving end device in the n+1-th transmission; $h_{ij}^{n+1}$ represents a channel from a *j-th* transmitting antenna to an *i-th* receiving antenna in the n+1-th transmission, where *i,j* = 0,1; $s_1$ and $s_2$ are two streams of data transmitted by the transmitting end device; and $W_{n+1}$ is a noise of the receiving end device.

The receiving end device may merge the data transmitted at two times using a symbol merging method, and the data transmitted at two times may be merged and expressed by the following equation.

$$\begin{bmatrix} \mathbf{r}_n \\ \mathbf{r}_{n+1} \end{bmatrix} = \begin{bmatrix} h_{11}^n & h_{12}^n \\ h_{21}^n & h_{22}^n \\ \\ h_{11}^{n+1} & h_{12}^{n+1} \\ h_{21}^{n+1} & h_{22}^{n+1} \end{bmatrix} \begin{bmatrix} s_1 \\ s_2 \end{bmatrix} + \begin{bmatrix} \mathbf{W}_n \\ \mathbf{W}_{n+1} \end{bmatrix}$$

The above equation may be demodulated with demodulating algorithms such as a conventional minimum mean square error (L-MMSE) method or zero forcing (Zero Forcing) method, to obtain a demodulation result of the merged data transmitted at two times.

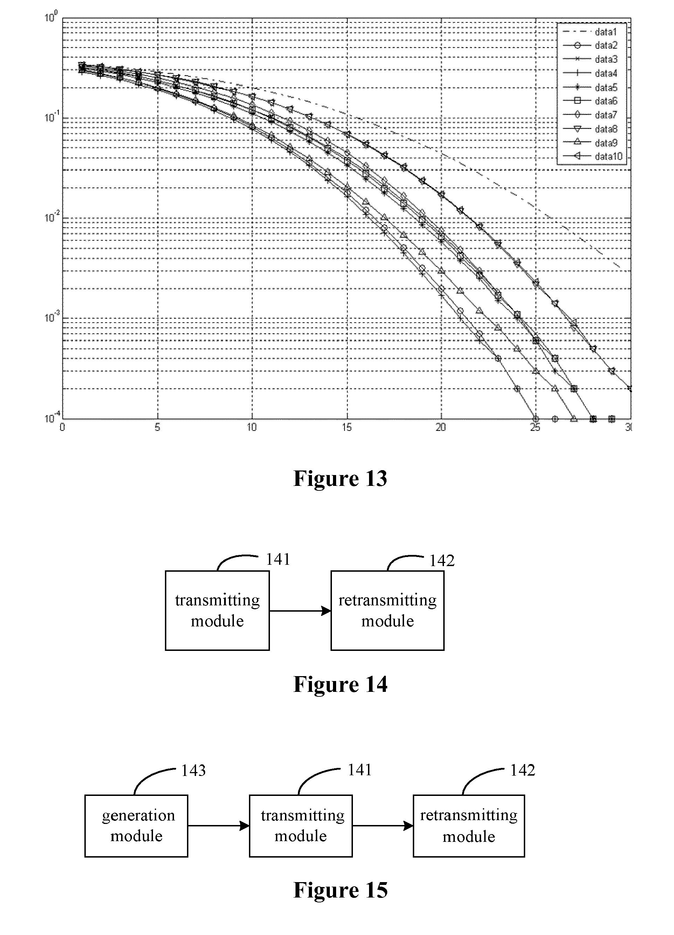

Figure 13 is schematic diagram of an effect of the data retransmission method according to the embodiments of the invention, which is performed by the antenna system shown in Figure 11. As shown in Figure 13, an abscissa represents a signal-to-noise ratio in dB, an ordinate represents a bit error rate. Curve data1 represents the received data retransmitted using a transmission mode which is same as that used in the data transmission process, rather than the data retransmission method according to the embodiments of the invention. Curves data2 to data10 represent received data retransmitted using the data retransmission method according to the embodiments of the invention, where the transmission mode used in the data retransmission process is orthogonal to the transmission mode used in the data transmission process. As shown in Figure 13, in the case of the same signal-to-noise ratio, the received data retransmitted using the data retransmission method according to the embodiments of the invention has a lower error rate.

In this embodiment, the ESPAR antenna is combined with the two-input-two-output MIMO system to describe the retransmission method provided according to the embodiments of the invention, but the present invention is not limited thereto. For example, the data retransmission method according to the embodiments of the invention can also be implemented by combining an EBG antenna with the MIMO system.

Figure 14 is a schematic structural diagram of a communication device according to a first embodiment of the invention. The communication device in the embodiment is a transmitting end device. As shown in Figure 14, the communication device includes the following.

A transmitting module 141 is configured to transmit a first data set to a receiving end device using a first transmission mode set.

A retransmitting module 142 is configured to retransmit the first data set to the receiving end device using a second transmission mode set, where the receiving end device merges the first data set transmitted by the transmitting module 141 using the first transmission mode set with the first data set retransmitted by the retransmitting module 142 using the second transmission mode set, and demodulates the merged data to obtain the first data set; and transmission modes in the first transmission mode set are one-to-one orthogonal or quasi-orthogonal to transmission modes in the second transmission mode set.

The communication device in this embodiment is configured to implement the technical solution in the method embodiment shown in Figure 1. The implementation principle and technical effect thereof are the same as the method embodiment shown in Figure 1, which will not be described herein.

Further, in the embodiment shown in Figure 14, in a case that the first transmission mode set includes a first transmission mode, the second transmission mode set includes a second transmission mode, and the first data set includes first data,

the transmitting module 141 is configured to transmit the first data to the receiving end device using the first transmission mode; and the retransmitting module 142 is configured to retransmit the first data to the receiving end device using the second transmission mode, where the receiving end device merges the first data transmitted by the transmitting module 141 using the first transmission mode with the first data retransmitted by the retransmitting module 142 using the second transmission mode, and demodulates the merged data to obtain the first data; and the first transmission mode is orthogonal or quasi-orthogonal to the second transmission mode.

Further, in the embodiment shown in Figure 14, in a case that the first transmission mode set includes a first transmission mode and a third transmission mode, the second transmission mode set includes a second transmission mode and a fourth transmission mode, and the first data set includes first data and second data,

the transmitting module 141 is configured to transmit the first data to the receiving end device using the first transmission mode and transmit the second data to the receiving end device using the third transmission mode; and the retransmitting module 142 is configured to retransmit the first data to the receiving end device using the second transmission mode and retransmit the second data to the receiving end device using the fourth transmission mode, where the receiving end device merges the first data transmitted by the transmitting module 141 using the first transmission mode with the first data retransmitted by the retransmitting module 142 using the second transmission mode and demodulates the merged data to obtain the first data, and the receiving end device merges the second data transmitted by the transmitting module 141 using the third transmission mode with the second data retransmitted by the retransmitting module 142 using the fourth transmission mode and demodulates the merged data to obtain the second data, where the first transmission mode is orthogonal or quasi-orthogonal to the second transmission mode, and the third transmission mode is orthogonal or quasi-orthogonal to the fourth transmission mode.

Further, in the embodiment shown in Figure 14, in a case that the first transmission mode is orthogonal or quasi-orthogonal to the third transmission mode, the retransmitting module 142 is configured to retransmit the first data to the receiving end device using the third transmission mode and retransmit the second data to the receiving end device using the first transmission mode, where the receiving end device merges the first data transmitted by the transmitting module 141 using the first transmission mode with the first data retransmitted by the retransmitting module 142 using the third transmission mode and demodulates the merged data to obtain the first data, and the receiving end device merges the second data transmitted by the transmitting module 141 using the third transmission mode with the second data retransmitted by the retransmitting module 142 using the first transmission mode and demodulates the merged data to obtain the second data.

Further, in the embodiment shown in Figure 14, the retransmitting module 142 is configured to retransmit the first data set to the receiving end device using the second transmission mode set on receiving a first data set retransmission request transmitted by the receiving end device; or retransmit the first data set to the receiving end device using the second transmission mode set in a case that no first data set reception feedback massage transmitted by the receiving end device is received in a predetermined time period.

Figure 15 is a schematic structural diagram of a communication device according to a second embodiment of the invention. The communication device includes an antenna with adjustable transmission modes, the antenna with the adjustable transmission modes includes at least two orthogonal or quasi-orthogonal transmission modes. On the basis of the embodiments shown in Figure 14, the communication device in this embodiment further includes:

a generation module 143 configured to generate the first transmission mode set.

Further, in the communication device according to the embodiment shown in Figure 15, the antenna with adjustable transmission modes includes an electronically steerable parasitic array radiator ESPAR antenna or an electromagnetic band gap EBG antenna.

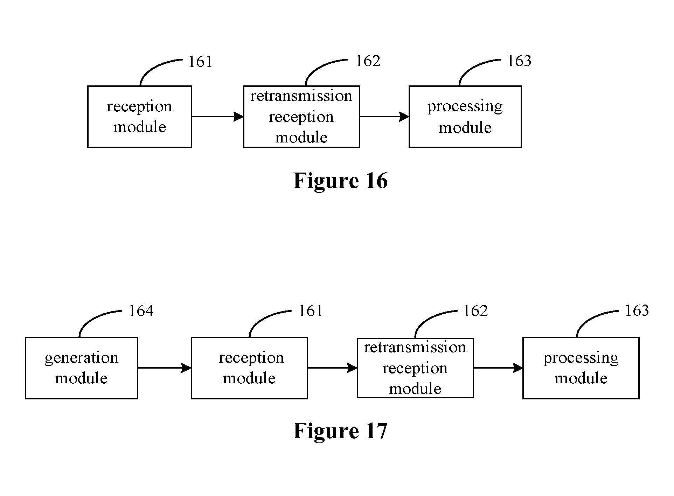

Figure 16 is a schematic structural diagram of a communication device according to a third embodiment of the invention. The communication device in the embodiment is a receiving end device. As shown in Figure 16, the communication device includes the following.

A reception module 161 is configured to receive a first data set transmitted by a transmitting end device, using a first reception mode set.

A retransmission reception module 162 is configured to receive the first data set retransmitted by the transmitting end device, using a second reception mode set, where reception modes in the first reception mode set are one-to-one orthogonal or quasi-orthogonal to reception modes in the second reception mode set.

A processing module 163 is configured to merge the first data set received by the reception module 161 using the first reception mode set with the first data set received by the retransmission reception module 162 using the second reception mode set, and demodulate the merged data set to obtain the first data set.

The communication device in this embodiment is configured to implement the technical solution in the method embodiment shown in Figure 5. The implementation principle and technical effect thereof are the same as the method embodiment shown in Figure 5, which will not be described herein.

Further, in the embodiment shown in Figure 16, in a case that the first reception mode set includes a first reception mode, the second reception mode set includes a second reception mode, and the first data set includes first data, the reception module 161 is configured to receive the first data transmitted by the transmitting end device, using the first reception mode; the retransmission reception module 162 is configured to receive the first data retransmitted by the transmitting end device, using the second reception mode, where the first reception mode is orthogonal or quasi-orthogonal to the second reception mode; and the processing module 163 is configured to the merge the first data received by the reception module 161 using the first reception mode with the first data received by the retransmission reception module 162 using the second reception mode, and demodulate the merged data to obtain the first data.

Further, in the embodiment shown in Figure 16, in a case that the first reception mode set includes a first reception mode and a third reception mode, the second reception mode set includes a second reception mode and a fourth reception mode, and the first data set includes first data and second data,
the reception module 161 is configured to receive the first data transmitted by the transmitting end device, using the first reception mode; and receive the second data transmitted by the transmitting end device, using the third reception mode; the retransmission reception module 162 is configured to receive the first data retransmitted by the transmitting end device, using the second reception mode, and receive the second data retransmitted by the transmitting end, using the fourth reception mode, where the first reception mode is orthogonal or quasi-orthogonal to the second reception mode, and the third reception mode is orthogonal or quasi-orthogonal to the fourth reception mode; and the processing module 163 is configured to merge the first data received by the reception module 161 using the first reception mode with the first data received by the retransmission reception module 162 using the second reception mode, and demodulate the merged data to obtain the first data; and merge the second data received by the reception module 161 using the third reception mode with the second data received by the retransmission reception module 162 using the fourth reception mode, and demodulate the merged data to obtain the second data.

Further, in the embodiment shown in Figure 16, in a case that the first reception mode is orthogonal or quasi-orthogonal to the third reception mode,
the retransmission reception module 162 is configured to receive the first data retransmitted by the transmitting end device, using the third reception mode; and receive the second data retransmitted by the transmitting end device, using the first reception mode; and the processing module 163 is configured to merge the first data received by the reception module 161 using the first reception mode with the first data received by the retransmission reception module 162 using the third reception mode, and demodulate the merged data to obtain the first data; and merge the second data received by the reception module 161 using the third reception mode with the second data received by the retransmission reception module 162 using the first reception mode, and demodulate the merged data to obtain the second data.

Further, in the embodiment shown in Figure 16, the retransmission reception module 162 is configured to transmit a first data set retransmission request to the transmitting end device after receiving the first data set using the first reception mode set, and receive the first data set retransmitted by the transmitting end device using the second reception mode set; or receive the first data set retransmitted by the transmitting end device, using the second reception mode set, in a case that a first data set reception feedback massage is not transmitted to the transmitting end device in a predetermined time period.

Figure 17 is a schematic structural diagram of a communication device according to a fourth embodiment of the invention. The communication device includes an antenna with adjustable reception modes. The antenna with the adjustable transmission modes includes at least two orthogonal or quasi-orthogonal reception modes. On the basis of the embodiments shown in Figure 16, the communication device in this embodiment further includes:

a generation module 164 configured to generate the first reception mode set.

Further, in the communication device in the embodiment shown in Figure 17, the antenna with adjustable reception modes includes an electronically steerable parasitic array radiator ESPAR antenna or an electromagnetic band gap EBG antenna.

It should be understood by those ordinal skilled in the art, related hardware may be instructed, by using a program, to perform some or all of the steps of the embodiment of the method described above. The program may be stored in a computer readable storage medium. The program, when is executed, performs the steps of the embodiment of the method described above. The storage medium includes various mediums that can store program codes, such as ROM, RAM, magnetic disk or optical disk.

Finally, it is to be noted, the above embodiments are only intended to describe the technical solutions of the invention, but not to limit the scope of the invention. Although the invention is described in detail with reference to the above embodiments, it should be understood by those ordinal skilled in the art that modifications can be made to the technical solutions recorded in the above embodiments or equivalent replacements can be made to some or all of the technical features thereof, which modifications and equivalent replacements will not make the corresponding technical solutions deviate from the scope of the technical solutions of the embodiments of the invention.

**Claims**

1. A data retransmission method, comprising:

   transmitting, by a transmitting end device, a first data set to a receiving end device using a first transmission mode set; and
   retransmitting, by the transmitting end device, the first data set to the receiving end device using a second transmission mode set, wherein the receiving end device merges the first data set transmitted by the transmitting end device using the first transmission mode set with the first data set retransmitted by the transmitting end device using the second transmission mode set, and demodulates the merged data set to obtain the first data set; and transmission modes in the first transmission mode set are one-to-one orthogonal or quasi-orthogonal to transmission modes in the second transmission mode set.

2. The method according to claim 1, wherein the first transmission mode set comprises a first transmission mode, the second transmission mode set comprises a second transmission mode, and the first data set comprises first data; the transmitting, by a transmitting end device, a first data set to a receiving end device using a first transmission mode set comprises:

   transmitting, by the transmitting end device, the first data to the receiving end device using the first transmission mode; and

   the retransmitting, by the transmitting end device, the first data set to the receiving end device using a second transmission mode set, wherein the receiving end device merges the first data set transmitted by the transmitting end device using the first transmission mode set with the first data set retransmitted by the transmitting end device using the second transmission mode set, and demodulates the merged data set to obtain the first data set; and transmission modes in the first transmission mode set are one-to-one orthogonal or quasi-orthogonal to transmission modes in the second transmission mode set, comprises:

   retransmitting, by the transmitting end device, the first data to the receiving end device using the second transmission mode, wherein the receiving end device merges the first data transmitted by the transmitting end device using the first transmission mode with the first data retransmitted by the transmitting end device using the second transmission mode, and demodulates the merged data to obtain first data; and the first transmission mode is orthogonal or quasi-orthogonal to the second transmission mode.

3. The method according to claim 1, wherein the first transmission mode set comprises a first transmission mode and a third transmission mode, the second transmission mode set comprises a second transmission mode and a fourth transmission mode, and the first data set comprises first data and second data; the transmitting, by a transmitting end device, a first data set to a receiving end device using a first transmission mode set comprises:

   transmitting, by the transmitting end device, the first data to the receiving end device using the first transmission mode; and transmitting, by the transmitting end device, the second data to the receiving end device using the third transmission mode; and

the retransmitting, by the transmitting end device, the first data set to the receiving end device using a second transmission mode set, wherein the receiving end device merges the first data set transmitted by the transmitting end device using the first transmission mode set with the first data set retransmitted by the transmitting end device using the second transmission mode set, and demodulates the merged data set to obtain the first data set; and transmission modes in the first transmission mode set are one-to-one orthogonal or quasi-orthogonal to transmission modes in the second transmission mode set, comprises:

retransmitting, by the transmitting end device, the first data to the receiving end device using the second transmission mode; and retransmitting, by the transmitting end device, the second data to the receiving end device using the fourth transmission mode, wherein the receiving end device merges the first data transmitted by the transmitting end device using the first transmission mode with the first data retransmitted by the transmitting end device using the second transmission mode, and demodulates the merged data to obtain the first data; the receiving end device merges the second data transmitted by the transmitting end device using the third transmission mode with the second data retransmitted by the transmitting end device using the fourth transmission mode, and demodulates the merged data to obtain the second data; the first transmission mode is orthogonal or quasi-orthogonal to the second transmission mode; and the third transmission mode is orthogonal or quasi-orthogonal to the fourth transmission mode.

4. The method according claim 3, wherein the first transmission mode is orthogonal or quasi-orthogonal to the third transmission mode; and
the retransmitting, by the transmitting end device, the first data set to the receiving end device using a second transmission mode set, wherein the receiving end device merges the first data set transmitted by the transmitting end device using the first transmission mode set with the first data set retransmitted by the transmitting end device using the second transmission mode set, and demodulates the merged data set to obtain the first data set; and transmission modes in the first transmission mode set are one-to-one orthogonal or quasi-orthogonal to transmission modes in the second transmission mode set, comprises:

retransmitting, by the transmitting end device, the first data to the receiving end device using the third transmission mode; and retransmitting, by the transmitting end device, the second data to the receiving end device using the first transmission mode, wherein the receiving end device merges the first data transmitted by the transmitting end device using the first transmission mode with the first data retransmitted by the transmitting end device using the third transmission mode, and demodulates the merged data to obtain the first data; and the receiving end device merges the second data transmitted by the transmitting end device using the third transmission mode with the second data retransmitted by the transmitting end device using the first transmission mode, and demodulates the merged data to obtain the second data.

5. The method according to any one of claims 1 to 4, wherein the retransmitting, by the transmitting end device, the first data set to the receiving end device using a second transmission mode set comprises:

retransmitting, by the transmitting end device, the first data set to the receiving end device using the second transmission mode set on receiving a first data set retransmission request transmitted by the receiving end device; or
retransmitting, by the transmitting end device, the first data set to the receiving end device using the second transmission mode set, in a case that no first data set reception feedback massage transmitted by the receiving end device is received by the transmitting end device in a predetermined time period.

6. The method according to any one of claims 2 to 5, wherein the transmitting end device comprises an antenna with adjustable transmission modes, the antenna with adjustable transmission modes comprises at least two orthogonal or quasi-orthogonal transmission modes; and
before the transmitting, by a transmitting end device, a first data set to a receiving end device using a first transmission mode set, the method further comprises:

generating, by the transmitting end device, the first transmission mode set.

7. The method according to claim 6, wherein the antenna with adjustable transmission modes comprises an electronically steerable parasitic array radiator ESPAR antenna or an electromagnetic band gap EBG antenna.

8. A data retransmission method, comprising:

receiving, by a receiving end device, a first data set transmitted by a transmitting end device, using a first reception mode set;

receiving, by the receiving end device, the first data set retransmitted by the transmitting end device, using a second reception mode set, wherein reception modes in the first reception mode set are one-to-one orthogonal or quasi-orthogonal to reception modes in the second reception mode set; and

merging, by the receiving end device, the first data set received using the first reception mode set with the first data set received using the second reception mode set; and demodulating, by the receiving end device, the merged data set to obtain the first data set.

9. The method according to claim 8, wherein the first reception mode set comprises a first reception mode, the second reception mode set comprises a second reception mode, and the first data set comprises first data;

the receiving, by a receiving end device, a first data set transmitted by a transmitting end device, using a first reception mode set comprises:

receiving, by the receiving end device, the first data transmitted by the transmitting end device, using the first reception mode;

the receiving, by the receiving end device, the first data set retransmitted by the transmitting end device, using a second reception mode set, wherein reception modes in the first reception mode set are one-to-one orthogonal or quasi-orthogonal to reception modes in the second reception mode set comprises:

receiving, by the receiving end device, the first data retransmitted by the transmitting end device, using the second reception mode, wherein the first reception mode is orthogonal or quasi-orthogonal to the second reception mode; and

the merging, by the receiving end device, the first data set received using the first reception mode set with the first data set received using the second reception mode set; and demodulating, by the receiving end device, the merged data set to obtain the first data set comprises:

merging, by the receiving end device, the first data received using the first reception mode with the first data received using the second reception mode and demodulating, by the receiving end device, the merged data to obtain the first data.

10. The method according to claim 8, wherein the first reception mode set comprises a first reception mode and a third reception mode, the second reception mode set comprises a second reception mode and a fourth reception mode, and the first data set comprises first data and second data;

the receiving, by a receiving end device, a first data set transmitted by a transmitting end device, using a first reception mode set comprises:

receiving, by the receiving end device, the first data transmitted by the transmitting end device, using the first reception mode; and receiving, by the receiving end device, the second data transmitted by the transmitting end device, using the third reception mode;

the receiving, by the receiving end device, the first data set retransmitted by the transmitting end device, using a second reception mode set, wherein reception modes in the first reception mode set are one-to-one orthogonal or quasi-orthogonal to reception modes in the second reception mode set comprises:

receiving, by the receiving end device, the first data retransmitted by the transmitting end device, using the second reception mode; and receiving, by the receiving end device, the second data retransmitted by the transmitting end, using the fourth reception mode, wherein the first reception mode is orthogonal or quasi-orthogonal to the second reception mode, and the third reception mode is orthogonal or quasi-orthogonal to the fourth reception mode; and

the merging, by the receiving end device, the first data set received using the first reception mode set with the first data set received using the second reception mode set; and demodulating, by the receiving end device, the merged data set to obtain the first data set comprises:

merging, by the receiving end device, the first data received using the first reception mode with the first data received using the second reception mode, and demodulating, by the receiving end device, the merged data to obtain the first data; and merging, by the receiving end device, the second data received using the third reception mode with the second data received using the fourth reception mode, and demodulating, by the receiving end device, the merged data to obtain the second data.

11. The method according to claim 10, wherein the first reception mode is orthogonal or quasi-orthogonal to the third reception mode;

the receiving, by the receiving end device, the first data set retransmitted by the transmitting end device, using a second reception mode set, wherein reception modes in the first reception mode set are one-to-one orthogonal or quasi-orthogonal to reception modes in the second reception mode set comprises:

receiving, by the receiving end device, the first data retransmitted by the transmitting end device, using the third reception mode; and receiving, by the receiving end device, the second data retransmitted by the transmitting end device, using the first reception mode; and

the merging, by the receiving end device, the first data set received using the first reception mode set with the first data set received using the second reception mode set; and demodulating, by the receiving end device ,the merged data set to obtain the first data set comprises:

merging, by the receiving end device, the first data received using the first reception mode with the first data received using the third reception mode, and demodulating, by the receiving end device, the merged data to obtain the first data; and merging, by the receiving end device, the second data received using the third reception mode with the second data received using the first reception mode, and demodulating, by the receiving end device, the merged data to obtain the second data.

12. The method according to any one of claims 8 to 11, wherein the receiving, by the receiving end device, the first data set retransmitted by the transmitting end device, using a second reception mode set comprises:

transmitting, by the receiving end device, a first data set retransmission request to the transmitting end device after receiving the first data set using the first reception mode set; and receiving, by the receiving end device, the first data set retransmitted by the transmitting end device, using the second reception mode set; or receiving, by the receiving end device, the first data set retransmitted by the transmitting end device, using the second reception mode set, in a case that a first data set reception feedback massage is not transmitted by the receiving end device to the transmitting end device in a predetermined time period.

13. The method according to any one of claims 10 to 12, wherein the receiving end device comprises an antenna with adjustable transmission modes, and the antenna with adjustable transmission modes comprises at least two orthogonal or quasi-orthogonal transmission modes; and

before the receiving, by a receiving end device, a first data set transmitted by a transmitting end device, using a first reception mode set, the method further comprises:

generating, by the receiving end device, the first reception mode set.

14. The method according to claim 13, wherein the antenna with adjustable transmission modes comprises an electronically steerable parasitic array radiator ESPAR antenna or an electromagnetic band gap EBG antenna.

15. A communication device, comprising:

a transmitting module configured to transmit a first data set to a receiving end device using a first transmission mode set; and

a retransmitting module configured to retransmit the first data set to the receiving end device using a second transmission mode set, wherein the receiving end device merges the first data set transmitted by the transmitting module using the first transmission mode set with the first data set retransmitted by the retransmitting module using the second transmission mode set, and demodulates the merged data set to obtain the first data set; and transmission modes in the first transmission mode set are one-to-one orthogonal or quasi-orthogonal to transmission modes in the second transmission mode set.

16. The communication device according to claim 15, wherein the first transmission mode set comprises a first transmission mode, the second transmission mode set comprises a second transmission mode, and the first data set comprises first data;

the transmitting module is configured to transmit the first data to the receiving end device using the first transmission mode; and

the retransmitting module is configured to retransmit the first data to the receiving end device using the second transmission mode, wherein the receiving end device merges the first data transmitted by the transmitting module using the first transmission mode with the first data retransmitted by the retransmitting module using the second transmission mode, and demodulates the merged data to obtain the first data; and the first transmission mode is orthogonal or quasi-orthogonal to the second transmission mode.

17. The communicate device according to claim 15, wherein the first transmission mode set comprises a first transmission mode and a third transmission mode, the second transmission mode set comprises a second transmission mode and a fourth transmission mode, and the first data set comprises first data and second data;

the transmitting module is configured to transmit the first data to the receiving end device using the first transmission mode, and transmit the second data to the receiving end device using the third transmission mode; and

the retransmitting module is configured to retransmit the first data to the receiving end device using the second transmission mode, and retransmit the second data to the receiving end device using the fourth transmission mode, wherein the receiving end device merges the first data transmitted by the transmitting module using the first transmission mode with the first data retransmitted by the retransmitting module using the second transmission mode, and demodulates the merged data to obtain the first data; the receiving end device merges the second data transmitted by the transmitting module using the third transmission mode with the second data retransmitted by the retransmitting module using the fourth transmission mode, and demodulates the merged data to obtain the second data; the first transmission mode is orthogonal or quasi-orthogonal to the second transmission mode; and the third transmission mode is orthogonal or quasi-orthogonal to the fourth transmission mode.

18. The communication device according to claim 17, wherein the first transmission mode is orthogonal or quasi-orthogonal to the third transmission mode; and

the retransmitting module is configured to retransmit the first data to the receiving end device using the third transmission mode, and retransmit the second data to the receiving end device using the first transmission mode, wherein the receiving end device merges the first data transmitted by the transmitting module using the first transmission mode with the first data retransmitted by the retransmitting module using the third transmission mode, and demodulates the merged data to obtain the first data; and the receiving end device merges the second data transmitted by the transmitting module using the third transmission mode with the second data retransmitted by the retransmitting module using the first transmission mode, and demodulates the merged data to obtain the second data.

19. The communication device according to any one of claims 15 to 18, wherein the retransmitting module is configured to retransmit the first data set to the receiving end device using the second transmission mode set on receiving a first data set retransmission request transmitted by the receiving end device; or retransmit the first data set to the receiving end device using the second transmission mode set, in a case that no first data set reception feedback massage transmitted by the receiving end device is received in a predetermined time period.

20. The communication device according to any one of claims 16 to 19, wherein the transmitting end device comprises an antenna with adjustable transmission modes, and the antenna with adjustable transmission modes includes at least two orthogonal or quasi-orthogonal transmission modes; and

the communication device further comprises:

a generation module configured to generate the first transmission mode set.

21. The communication device according to claim 20, wherein the antenna with adjustable transmission modes comprises an electronically steerable parasitic array radiator ESPAR antenna or an electromagnetic band gap EBG antenna.

22. A communication device, comprising:

a reception module configured to receive a first data set transmitted by a transmitting end device, using a first reception mode set;

a retransmission reception module configured to receive the first data set retransmitted by the transmitting end device, using a second reception mode set, wherein reception modes in the first reception mode set are one-to-one orthogonal or quasi-orthogonal to reception modes in the second reception mode set; and
a processing module configured to merge the first data set received by the reception module using the first reception mode set with the first data set received by the retransmission reception module using the second reception mode set, and demodulate the merged data set to obtain the first data set.

23. The communication device according to claim 22, wherein the first reception mode set comprises a first reception mode, the second reception mode set comprises a second reception mode, and the first data set comprises first data;
the reception module is configured to receive the first data transmitted by the transmitting end device, using the first reception mode;
the retransmission reception module is configured to receive the first data retransmitted by the transmitting end device, using the second reception mode, wherein the first reception mode is orthogonal or quasi-orthogonal to the second reception mode; and
the processing module is configured to the merge the first data received by the reception module using the first reception mode with the first data received by the retransmission reception module using the second reception mode, and demodulate the merged data to obtain the first data.

24. The communication device according to claim 22, wherein the first reception mode set comprises a first reception mode and a third reception mode, the second reception mode set comprises a second reception mode and a fourth reception mode, and the first data set comprises first data and second data;
the reception module is configured to receive the first data transmitted by the transmitting end device, using the first reception mode; and receive the second data transmitted by the transmitting end device, using the third reception mode;
the retransmission reception module is configured to receive the first data retransmitted by the transmitting end device, using the second reception mode; and receive the second data retransmitted by the transmitting end device, using the fourth reception mode, wherein the first reception mode is orthogonal or quasi-orthogonal to the second reception mode, and the third reception mode is orthogonal or quasi-orthogonal to the fourth reception mode;
the processing module is configured to merge the first data received by the reception module using the first reception mode with the first data received by the retransmission reception module using the second reception mode, and demodulate the merged data to obtain the first data; and merge the second data received by the reception module using the third reception mode with the second data received by the retransmission reception module using the fourth reception mode, and demodulate the merged data to obtain the second data.

25. The communication device according to claim 24, wherein the first reception mode is orthogonal or quasi-orthogonal to the third reception mode;
the retransmission reception module is configured to receive the first data retransmitted by the transmitting end device, using the third reception mode; and receive the second data retransmitted by the transmitting end device, using the first reception mode; and
the processing module is configured to merge the first data received by the reception module using the first reception mode with the first data received by the retransmission reception module using the third reception mode, and demodulate the merged data to obtain the first data; and merge the second data received by the reception module using the third reception mode with the second data received by the retransmission reception module using the first reception mode, and demodulate the merged data to obtain the second data.

26. The communication device according to any one of claims 22 to 25, wherein the retransmission reception module is configured to transmit a first data set retransmission request to the transmitting end device after receiving the first data set using the first reception mode set, and receive the first data set retransmitted by the transmitting end device, using the second reception mode set; or receive the first data set retransmitted by the transmitting end device, using the second reception mode set, in a case that a first data set reception feedback massage is not transmitted to the transmitting end device in a predetermined time period.

27. The communication device according to any one of claims 24 to 26, wherein the communication device comprises an antenna with adjustable transmission modes, the antenna with adjustable transmission modes includes at least two orthogonal or quasi-orthogonal transmission modes; and the communication device further comprises: a generation module configured to generate the first reception mode set.

28. The communication device according to claim 27, wherein the antenna with adjustable transmission modes comprises an electronically steerable parasitic array radiator ESPAR antenna or an electromagnetic band gap EBG antenna.

the transmitting end device transmits a first data set to a receiving end device using a first transmission mode set — S101

the transmitting end device retransmits the first data set to the receiving end device using a second transmission mode set, where the receiving end device merges the first data set transmitted by the transmitting end device using the first transmission mode set with the first data set retransmitted by the transmitting end device using the second transmission mode set, and demodulates the merged data set to obtain the first data set, and transmission modes in the first transmission mode set are one-to-one orthogonal or quasi-orthogonal to transmission modes in the second transmission mode set — S102

**Figure 1**

the transmitting end device transmits the first data to the receiving end device using the first transmission mode — S201

the transmitting end device retransmits the first data to the receiving end device using the second transmission mode, where the receiving end device merges the first data transmitted by the transmitting end device using the first transmission mode with the first data retransmitted by the transmitting end device using the second transmission mode, and demodulates the merged data to obtain the first data; and the first transmission mode is orthogonal or quasi-orthogonal to the second transmission mode — S202

**Figure 2**

the transmitting end device transmits the first data to the receiving end device using the first transmission mode, and transmits the second data to the receiving end device using the third transmission mode ⎯ S301

the transmitting end device retransmits the first data to the receiving end device using the second transmission mode and retransmits the second data to the receiving end device using the fourth transmission mode, where the receiving end device merges the first data transmitted by the transmitting end device using the first transmission mode with the first data retransmitted by the transmitting end device using the second transmission mode and demodulates the merged data to obtain first data, and the receiving end device merges the second data transmitted by the transmitting end device using the third transmission mode with the second data retransmitted by the transmitting end device using the fourth transmission mode and demodulates the merged data to obtain the second data, where the first transmission mode is orthogonal or quasi-orthogonal to the second transmission mode, and the third transmission mode is orthogonal or quasi-orthogonal to the fourth transmission mode ⎯ S302

**Figure 3**

the transmitting end device transmits the first data to the receiving end device using the first transmission mode, and transmits the second data to the receiving end device using the third transmission mode ⎯ S401

the transmitting end device retransmits the first data to the receiving end device using the third transmission mode and retransmits the second data to the receiving end device using the first transmission mode, where the receiving end device merges the first data transmitted by the transmitting end device using the first transmission mode with the first data retransmitted by the transmitting end device using the third transmission mode, and demodulates the merged data to obtain the first data; and the receiving end device merges the second data transmitted by the transmitting end device using the third transmission mode with the second data retransmitted by the transmitting end device using the first transmission mode, and demodulates the merged data to obtain the second data ⎯ S402

**Figure 4**

| the receiving end device receives a first data set transmitted by a transmitting end device, using a first reception mode set | S501 |

↓

| the receiving end device receives the first data set retransmitted by the transmitting end device, using a second reception mode set, where reception modes in the first reception mode set are one-to-one orthogonal or quasi-orthogonal to reception modes in the second reception mode set | S502 |

↓

| the receiving end device merges the first data set received using the first reception mode set with the first data set received using the second reception mode set, and demodulates the merged data to obtain the first data set | S503 |

**Figure 5**

| the receiving end device receives the first data transmitted by the transmitting end device, using the first reception mode | S601 |

↓

| the receiving end device receives the first data retransmitted by the transmitting end device, using the second reception mode, where the first reception mode is orthogonal or quasi-orthogonal to the second reception mode | S602 |

↓

| the receiving end device merges the first data received using the first reception mode with the first data received using the second reception mode, and demodulates the merged data to obtain the first data | S603 |

**Figure 6**

the receiving end device receives the first data transmitted by the transmitting end device, using the first reception mode; and receives the second data transmitted by the transmitting end device, using the third reception mode — S701

the receiving end device receives the first data retransmitted by the transmitting end device, using the second reception mode; and receives the second data retransmitted by the transmitting end device, using the fourth reception mode, where the first reception mode is orthogonal or quasi-orthogonal to the second reception mode, and the third reception mode is orthogonal or quasi-orthogonal to the fourth reception mode — S702

the receiving end device merges the first data received using the first reception mode with the first data received using the second reception mode, and demodulates the merged data to obtain the first data; and merges the second data received using the third reception mode with the second data received using the fourth reception mode, and demodulates the merged data to obtain the second data — S703

**Figure 7**

the receiving end device receives the first data transmitted by the transmitting end device, using the first reception mode; and receives the second data transmitted by the transmitting end device, using the third reception mode — S801

the receiving end device receives the first data retransmitted by the transmitting end device, using the third reception mode; and receives the second data retransmitted by the transmitting end device, using the first reception mode — S802

the receiving end device merges the first data received using the first reception mode with the first data received using the third reception mode, and demodulates the merged data to obtain the first data; and merges the second data received using the third reception mode with the second data received using the first reception mode, and demodulates the merged data to obtain the second data — S803

**Figure 8**

**Figure 9**

**Figure 10**

1110 1112 1102 1104 radio frequency port 1109 1111 1106 1108 1113 control circuit 1101 1103 radio frequency port 1105 1107

$d_1$ $d_1$ $d_2$ $d_1$ $d_1$

**Fig.11**

**Figure 12**

**Figure 13**

**Figure 14**

**Figure 15**

161

162

163

reception
module

retransmission
reception
module

processing
module

**Figure 16**

164

161

162

163

generation
module

reception
module

retransmission
reception
module

processing
module

**Figure 17**

# INTERNATIONAL SEARCH REPORT

| International application No. |
|---|
| PCT/CN2014/075545 |

## A. CLASSIFICATION OF SUBJECT MATTER

H04L 1/06 (2006.01) i

According to International Patent Classification (IPC) or to both national classification and IPC

## B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS, VEN, CNTXT: first, second, send, transmit+, mode, retransmission, orthogonal

## C. DOCUMENTS CONSIDERED TO BE RELEVANT

| Category* | Citation of document, with indication, where appropriate, of the relevant passages | Relevant to claim No. |
|---|---|---|
| X | CN 102098139 A (ALCATEL-LUCENT SHANGHAI BELL CO., LTD.) 15 June 2011 (15.06.2011) | 1, 2, 5-9, 12-16, 19-23, 26-28 |
| A | CN 102098139 A (ALCATEL-LUCENT SHANGHAI BELL CO., LTD.) 15 June 2011 (15.06.2011) | 3, 4, 10, 11, 17, 18, 24, 25 |
| A | CN 102804874 A (SHARP KK.) 28 November 2012 (28.11.2012) | 1-28 |
| A | CN 101292436 A (LUCENT TECHNOLOGIES INC.) 22 October 2008 (22.10.2008) | 1-28 |
| A | CN 101507169 A (QUALCOMM INCORPORATED) 12 August 2009 (12.08.2009) | 1-28 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 July 2014 | 08 August 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>CAO, Yuhua<br><br>Telephone No. (86-10) 62412272 |

Form PCT/ISA/210 (second sheet) (July 2009)

## INTERNATIONAL SEARCH REPORT
### Information on patent family members

International application No.

PCT/CN2014/075545

| Patent Documents referred in the Report | Publication Date | Patent Family | Publication Date |
|---|---|---|---|
| CN 102098139 A | 15 June 2011 | CN 102098139 B | 11 September 2013 |
| CN 102804874 A | 28 November 2012 | WO 2010146938 A1 | 23 December 2010 |
| | | EA 201270029 A1 | 30 July 2012 |
| | | US 2012106490 A1 | 03 May 2012 |
| | | EP 2445278 A1 | 25 April 2012 |
| | | JP 5377639 B2 | 25 December 2013 |
| CN 101292436 A | 28 November 2012 | EP 1938466 A1 | 02 July 2008 |
| | | WO 2007050391 A1 | 03 May 2007 |
| | | KR 20080058419 A | 25 June 2008 |
| | | US 2007091786 A1 | 26 April 2007 |
| | | JP 2009513076 A | 26 March 2009 |
| | | IN 200801880 P4 | 23 January 2009 |
| CN 101507169 A | 12 August 2009 | TW 200835217 A | 16 August 2008 |
| | | CN 101507169 B | 02 January 2013 |
| | | UA 95492 C2 | 10 August 2011 |
| | | N 200900838 P1 | 29 May 2009 |
| | | AU 2007289174 A1 | 05 March 2009 |
| | | MX 2009002102 A | 31 March 2009 |
| | | CA 2661116 C | 19 November 2013 |
| | | RU 2424619 C2 | 20 July 2011 |
| | | NO 20090800 A | 30 March 2009 |
| | | JP 2010503291 A | 28 January 2010 |
| | | CA 2661116 A1 | 06 March 2008 |
| | | EP 2372939 A1 | 05 October 2011 |
| | | MX 296814 B | 06 March 2012 |
| | | JP 2012151858 A | 09 August 2012 |
| | | CN 103023627 A | 03 April 2013 |
| | | RU 2009111229 A | 10 October 2010 |

Form PCT/ISA/210 (patent family annex) (July 2009)

## INTERNATIONAL SEARCH REPORT
Information on patent family members

| International application No. |
| --- |
| PCT/CN2014/075545 |

| Patent Documents referred in the Report | Publication Date | Patent Family | Publication Date |
| --- | --- | --- | --- |
| | | SG 150024 B | 31 October 2012 |
| | | US 2008095109 A1 | 24 April 2008 |
| | | WO 2008028006 A3 | 10 July 2008 |
| | | KR 1033736 B1 | 09 May 2011 |
| | | HK 1134179 A1 | 19 September 2013 |
| | | KR 20090049080 A | 15 May 2009 |

Form PCT/ISA /210 (patent family annex) (July 2009)